# EUROPEAN PATENT SPECIFICATION

(11) **EP 3 678 935 B1**
(45) Date of publication and mention of the grant of the patent: **10.11.2021**
(21) Application number: 18922110.4
(22) Date of filing: 30.11.2018
(51) Int. Cl.: B64C 1/30, B64C 39/02, B64D 1/18, B64C 27/50

(54) **FOLDABLE UNMANNED AERIAL VEHICLE**
FALTBARES UNBEMANNTES LUFTFAHRZEUG
VÉHICULE AÉRIEN SANS PILOTE PLIABLE

(43) Date of publication of application: 15.07.2020
(60) Divisional application: 21199837.2
(73) Proprietor: SZ DJI Technology Co., Ltd., Shenzhen, Guangdong 518057 (CN)
(72) Inventor: WU, Xiaolong, Guangdong 518057 (CN); ZHOU, Le, Guangdong 518057 (CN); GUO, Chaofan, Guangdong 518057 (CN); LU, Chuoying, Guangdong 518057 (CN)
(74) Representative: Appelt, Christian W.
(86) International application number: PCT/CN2018/118719
(87) International publication number: WO 2020/107457

(56) References cited:
- CN-A- 106 005 413
- CN-A- 106 005 413
- CN-A- 108 116 668
- CN-A- 108 791 846
- CN-A- 108 791 846
- CN-U- 204 368 421
- CN-U- 206 437 196
- CN-U- 206 569 245
- CN-U- 207 683 784
- CN-U- 207 683 784
- US-A1- 2016 214 713
- US-B2- 10 035 581

## Description

### TECHNICAL FIELD

The present disclosure relates to the technology field of unmanned aerial vehicle and, more particularly, to a foldable unmanned aerial vehicle.

### BACKGROUND

Aerial vehicles, such as unmanned aerial vehicles (UAVs), have been deployed for a wide range of applications. For example, UAVs have been used for fire and rescue activities, aerial photography, surveillance, geographical survey, power line inspection, and agriculture use. For example, UAVs have been used in farms to carry out various tasks, such as spraying a fluid, such as water, a fertilizer, an insect killer, etc. When used for fire and rescue activities, UAVs have also been used to spray a fire extinguishing agent to suppress wild fires.

The unmanned aerial vehicles currently available on the market typically include an even number of arms each mounted with a propulsion assembly, which may include a motor and a propeller. For example, some UAVs have four, six, or eight arms equipped with four, six, or eight propulsion assemblies. These arms and the propulsion assemblies mounted thereon are typically symmetrically distributed with respect to an axis of the central body of the UAV. In addition, the arms and the propulsion assemblies are typically identical. For example, the arms may have the same length. There are some problems associated with the identical configuration of the arms. For example, when the UAV is used for spraying a fluid to an agriculture field, the spray nozzles are typically disposed underneath the propulsion assemblies, e.g., under the propellers. The downward wind field generated by the propellers produces a downward pressure, resulting in a downward suppressing force. The downward suppressing force helps move the sprayed fluid droplets downwardly toward the field. However, the wind field (and hence the downward suppressing force)
generated by currently available UAVs having the identical arms and propulsion assemblies is typically weak, making the fluid droplets susceptible to being blown away by cross wind. Therefore, the ability to suppress the sprayed fluid droplets is typically insufficient. In addition, most UAVs available on the market for agriculture use are not foldable. The size of these UAVs are bulky, which makes transportation and storage inconvenient.

Therefore, there is a need to develop a foldable UAV that can provide improved spray effect with stronger suppressing pressure to help with the downward movement of the sprayed fluid droplets.

CN 108116668 A discloses an air-ground dual purpose all-electric multi-rotor manned aircraft. The manned aircraft is composed of a lift system, a power/transmission system, a machine body structure, a landing gear, an energy system, a flight control system, an avionic system and a safety rescue system, wherein the lift system adopts an X type four-rotor form; the power/transmission system is composed of four high-power direct current motors; the machine body structure is composed of a chassis, a front fairing and a seat shell; the landing gear adopts a front three-point wheel type landing gear; the energy system is composed of a high-power graphene lithium battery pack; the flight control system is composed of a steering column, a flight control computer, a GPS antenna, a data transmission antenna, a steering engine, a braking engine and a display system; the avionic system is mainly a power supply system; and the safety rescue system is composed of a quick release type five-point safety belt, a light flight helmet and a reserve parachute. The manned aircraft provided by the disclosure is foldable and shares a set of power system on the ground and in the air, and multiple safety schemes are stocked.

CN 106005413 A discloses a diverse foldable unmanned aerial vehicle, characterized by comprising: an unmanned aerial vehicle body provided with a frame, the lower end of the frame being connected with a case; a plurality of arms are connected to the side of the frame, a start end of each arm is movably connected to the frame, the arms rotate around the frame to fold or rotate to unfold around a frame body to be in a flight state. The design scheme is a subversion for traditional industrial designs, different-directional folding modes cooperate with different vehicle types to provide a portable design from fold-flexing to carry-receiving.

CN 108791846 A discloses a single-shot six-rotor-wing fire-extinguishing unmanned aerial vehicle. Folding pieces are mounted at all corners of a hexagon of a fuselage box body correspondingly, and oneends of vehicle arms are fixed to the fuselage box body through the folding pieces. A flight power system comprises six sets of flight power assemblies, and all the flight power assemblies are mountedat the cantilever ends of the vehicle arms correspondingly. A fire extinguishing bomb launcher is mounted in the middle of the lower surface of the fuselage box body. An aiming camera is located in front of the middle of the lower surface of the fuselage box body.

Other documents related to the preamble of the independent claims are CN 207683784 U, CN 206437196 U, and CN 204368421 U.

### SUMMARY

The present invention relates to a method of folding an unmanned aerial vehicle including a plurality of arms radially extending from a central body of the unmanned aerial vehicle as defined by independent claim 1.

The present invention also relates to an unmanned aerial vehicle as defined by independent claim 14.

According to embodiments of the present invention, one or more of the following features may be realized. The arms are configured to transform between a flight configuration in which the arms are

extended away from the central body and a compact configuration in which free ends of a first subset of the arms collectively define a rectangular area. Free ends of a second subset of the arms are closer to a yaw-axis of the unmanned aerial vehicle than the free ends of the first subset of the arms. A yaw-axis passes through the rectangular area.

The unmanned aerial vehicle also includes a fluid tank detachably coupled to a center portion of the central body. The unmanned aerial vehicle also includes a power supply detachably coupled to a rear portion of the central body. A first center of gravity of the unmanned aerial vehicle when the fluid tank and the power supply are detached from the central body is at least on a same vertical axis with a second center of gravity of the unmanned aerial vehicle when the fluid tank and the power supply are mounted on the central body.

The unmanned aerial vehicle also includes a fluid tank detachably coupled to a center portion of the central body. The fluid tank includes a first position limiting groove on an outer wall of the fluid tank. The unmanned aerial vehicle also includes a power supply detachably coupled to a rear portion of the central body. The power supply includes a second position limiting groove on an outer wall of the power supply. The unmanned aerial vehicle also includes a first protrusion disposed on the center portion of the central body, the first protrusion configured to be engageable with the position limiting groove of the fluid tank to limit a position of the fluid tank when the fluid tank is inserted into a space at the center portion of the central body. The unmanned aerial vehicle further includes a second protrusion disposed on the rear portion of the central body, the second protrusion configured to be engageable with the position limiting groove of the power supply to limit a position of the power supply when the power supply is inserted into a space at the rear portion of the central body.

The plurality of arms also include a third arm and a fourth arm respectively coupled to a front left side and a rear left side of the central body, the third arm and the fourth arm being foldable from positions where the third arm and the fourth arm radially extend from the central body to positions where the third arm and the fourth arm are disposed adjacent the central body and extend in directions substantially parallel with an axis connecting the first arm and the second arm. The plurality of arms also include a fifth arm and a sixth arm respectively coupled to a front right side and a rear right side of the central body, the fifth arm and the sixth arm being foldable from positions where the fifth arm and the sixth arm radially extend from the central body to positions where the fifth arm and the sixth arm are disposed adjacent the central body and extend in directions substantially parallel with the axis connecting the first arm and the second arm.

The plurality of arms include a first arm and a second arm respectively coupled to a front side and a rear side of the central body, the first arm having a first length and the second arm having a second length. The plurality of arms include a third arm and a fourth arm respectively coupled to a front left side and a rear left side of the central body, the third arm having a third length and the fourth arm having a fourth length. The plurality of arms include a fifth arm and a sixth arm respectively coupled to a front right side and a rear right side of the central body, the fifth arm having a fifth length and the sixth arm having a sixth length. The first arm is mounted to the central body at a first
arm mounting height, the second arm is mounted to the central body at a second arm mounting height, the third arm is mounted to the central body at a third arm mounting height, the fourth arm is mounted to the central body at a fourth arm mounting height, the fifth arm is mounted to the central body at a fifth arm mounting height, and the sixth arm is mounted to the central body at a sixth arm mounting height. Each of the first arm mounting height, the third arm mounting height, and the fifth arm mounting height is greater than each of the second arm mounting height, the fourth arm mounting height, and the sixth arm mounting height.

The arms are configured to transform between a flight configuration in which the arms are extended away from the central body and a compact configuration in which a first subset of the arms are folded toward a corresponding side of the central body, and a second subset of the arms are folded toward a lower portion of the central body.

A first subset of the arms are coupled to a head portion of the central body, a second subset of the plurality of arms are coupled to a tail portion of the central body. Each subset includes three arms comprising a middle arm and two side arms located on both sides of the middle arm. A length of the middle arm is shorter than lengths of the two side arms.

A first subset of the arms are foldable vertically and a second subset of the arms are foldable horizontally.

Embodiments of the present disclosure provide a UAV having six arms. In some embodiments, two of the six arms are shorter than the rest four of the six arms. The two arms that are shorter are coupled to a front side and a rear side of the UAV, where the front side is a side where a flight control board is disposed, and the rear side is the side opposite the front side. In some embodiments, the tip portions of the arms form a non-regular hexagon when the tip portions are virtually connected and viewed from above a top of the central body of the UAV. In some embodiments, inner angles of the non-regular hexagon corresponding to the tip portions of the front arm and the rear arm are greater than 120°, and inner angles of the non-regular hexagon corresponding to the tip portions of the arms coupled to the left side and the right side of the UAV are less than 120°. The disclosed configuration of the arms and the propulsion assemblies produces a substantially rectangular wind field, which improves the spray range. The disclosed UAV can improve the efficiency of agricultural spray. The efficiency can be increased by 40% to 100% as compared to other UAVs available on the market. In addition, the battery and the fluid tank are detachably mounted to the central body of the UAV. The battery and the tank can be relatively quickly detached from the UAV for services, replacement, refill, etc. The modular design of the battery and the fluid tank also improves operating safety and efficiency.

Other objects and features of the present disclosure will become apparent by a review of the specification, claims, and appended figures.

### BRIEF DESCRIPTION OF THE DRAWINGS

The novel features of the present disclosure are set forth with particularity in the appended claims. A better understanding of the features and advantages of the present disclosure will be obtained by referencing to the following detailed description that sets forth illustrative embodiments, in which the principles of the present disclosure are utilized, and the accompanying drawings of which:
FIG. 1 is a perspective view of a UAV, in accordance with an embodiment of the present disclosure.
FIG. 2 is another perspective view of the UAV shown in FIG. 1, in accordance with an embodiment of the present disclosure.
FIG. 3 is a top view of the UAV shown in FIG. 1, in accordance with an embodiment of the present disclosure.
FIG. 4 is a schematic diagram of a top view of the UAV shown in FIG. 1, illustrating example dimensions and the non-regular hexagon shape formed by virtually connecting the tip portions of the arms where the propulsion assemblies are mounted, in accordance with an embodiment of the present disclosure.
FIG. 5 is a front view of the UAV shown in FIG. 1, in accordance with an embodiment of the present disclosure.
FIG. 6 is a rear view of the UAV shown in FIG. 1, in accordance with an embodiment of the present disclosure.
FIG. 7 is a schematic fluid droplets distribution field generated by the UAV of FIG. 1, in accordance with an embodiment of the present disclosure.
FIG. 8A is a perspective view of the UAV of FIG. 1 in a partially folded state, in accordance with an embodiment of the present disclosure.
FIG. 8B is a perspective view of the UAV of FIG. 1 in a partially folded state, in accordance with an embodiment of the present disclosure.
FIG. 8C is a perspective view of the UAV of FIG. 1 in a partially folded state, in accordance with an embodiment of the present disclosure.
FIG. 8D is a perspective view of the UAV of FIG. 1 in a partially folded state, in accordance with an embodiment of the present disclosure.
FIG. 8E is a side view of the UAV of FIG. 1 in a completely folded state, in accordance with an embodiment of the present disclosure.
FIG. 8F is a top view of the UAV of FIG. 1 in a partially folded state, in accordance with an embodiment of the present disclosure.
FIG. 8G is a top view of the UAV of FIG. 1 in a partially folded state, in accordance with an embodiment of the present disclosure.
FIG. 8H is a top view of the UAV of FIG. 1 in a partially folded state, in accordance with an embodiment of the present disclosure.
FIG. 8I is a top view of the UAV of FIG. 1 in a partially folded state, in accordance with an embodiment of the present disclosure.
FIG. 8J is a top view of the UAV of FIG. 1 in a partially folded state, in accordance with an embodiment of the present disclosure.
FIG. 8K is a top view of the UAV of FIG. 1 in a completely folded state, in accordance with an embodiment of the present disclosure.
FIG. 9 is a flow chart illustrating a method of folding the UAV, in accordance with an embodiment of the present disclosure.
FIG. 10 is a perspective view of a fluid tank, in accordance with an embodiment of the present disclosure.
FIG. 11 is a perspective view of a UAV with a power supply detached from the central body of the UAV, and a fluid tank attached to the central body, in accordance with an embodiment of the present disclosure.
FIG. 12 is a perspective view of a UAV with the fluid tank at least partially removed from the central body, in accordance with an embodiment of the present disclosure.
FIG. 13 is another perspective view of a UAV with the power supply and the fluid tank removed from the central body, in accordance with an embodiment of the present disclosure.
FIG. 14 is a perspective view of a UAV with the power supply removed and the fluid tank partially removed from the central body, in accordance with an embodiment of the present disclosure.

### DETAILED DESCRIPTION

Technical solutions of the present disclosure will be described in detail with reference to the drawings. It will be appreciated that the described embodiments represent some, rather than all, of the embodiments of the present disclosure.

Example embodiments will be described with reference to the accompanying drawings, in which the same numbers refer to the same or similar elements unless otherwise specified.

As used herein, when a first component (or unit, element, member, part, piece) is referred to as "coupled," "mounted," "fixed," "secured" to or with a second component, it is intended that the first component may be directly coupled, mounted, fixed, or secured to or with the second component, or may be indirectly coupled, mounted, or fixed to or with the second component via another intermediate component. The terms "coupled," "mounted," "fixed," and "secured" do not necessarily imply that a first component is permanently coupled with a second component. The first component may be detachably coupled with the second component when these terms are used.

When a first component is referred to as "connected" to or with a second component, it is intended that the first component may be directly connected to or with the second component or may be indirectly connected to or with the second component via an intermediate component. The connection may include mechanical and/or electrical connections. The connection may be permanent or detachable. The electrical connection may be wired or wireless. The term "virtually connected" means that some items are connected in digital lines or superimposed imaginary lines.

When a first component is referred to as "disposed," "located," or "provided" on a second component, the first component may be directly disposed, located, or provided on the second component or may be indirectly disposed, located, or provided on the second component via an intermediate component. When a first component is referred to as "disposed," "located," or "provided" in a second component, the first component may be partially or entirely disposed, located, or provided in, inside, or within the second component. The terms "perpendicular," "horizontal," "left," "right," "up," "upward," "down," "downward," and similar expressions used herein are merely intended for description. The term "communicatively coupled" indicates that related items are coupled through a communication channel, such as a wired or wireless communication channel. The terms "clockwise" and "counter-clockwise" indicate relative directions as viewed from a perspective shown in the figures.

Unless otherwise defined, all the technical and scientific terms used herein have the same or similar meanings as generally understood by one of ordinary skill in the art. As described herein, the terms used in the specification of the present disclosure are intended to describe example embodiments, instead of limiting the present disclosure. The term "and/or" used herein includes any suitable combination of one or more related items listed.

Further, when an embodiment illustrated in a drawing shows a single element, it is understood that the embodiment may include a plurality of such elements. Likewise, when an embodiment illustrated in a drawing shows a plurality of such elements, it is understood that the embodiment may include only one such element. The number of elements illustrated in the drawing is for illustration purposes only, and should not be construed as limiting the scope of the embodiment. Moreover, unless otherwise noted, the embodiments shown in the drawings are not mutually exclusive, and they may be combined in any suitable manner. For example, elements shown in one embodiment but not another embodiment may nevertheless be included in the other embodiment.

The following descriptions explain example embodiments of the present disclosure, with reference to the accompanying drawings. Unless otherwise noted as having an obvious conflict, the embodiments or features included in various embodiments may be combined. The following embodiments do not limit the sequence of execution of the steps included in the disclosed methods. The sequence of the steps may be any suitable sequence, and certain steps may be repeated.

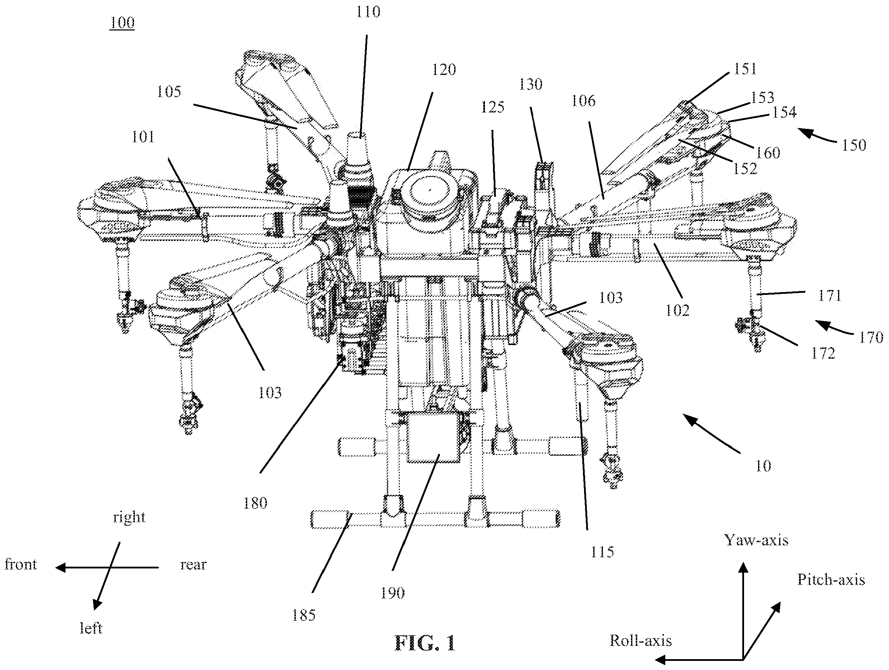

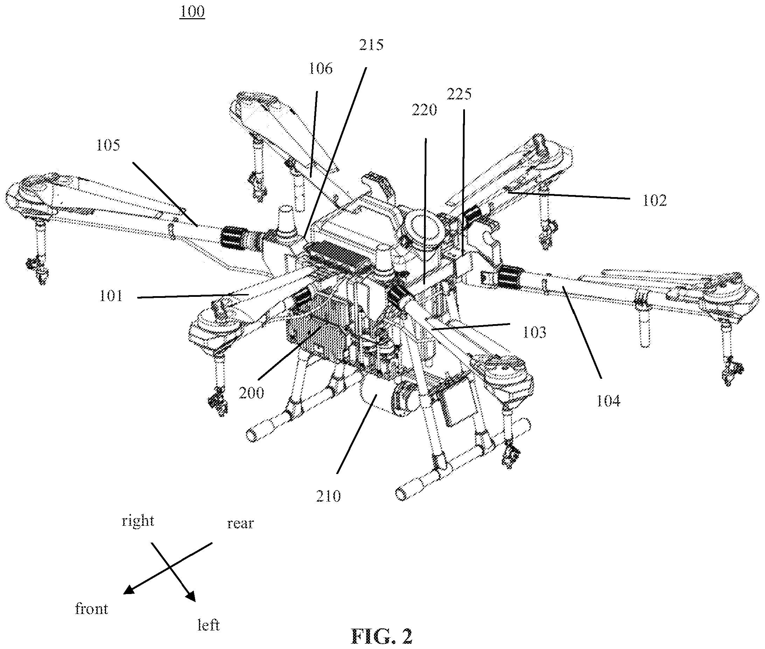

FIG. 1 is a perspective view of an aerial vehicle, such as an aircraft. The aerial vehicle may be an unmanned aerial vehicle (UAV) or any other suitable type of aerial vehicles. For discussion purposes, a UAV is used as an example of the aerial vehicle. A UAV 100 includes a central body 10 (or central body 10) including a plurality of frames. The central body 10 also includes a plurality of sides, including a front side (or a head portion or side) that is a side facing a moving direction of the UAV 100. A flight control board 200 (shown in FIG. 2) is mounted at the front side. The central body also includes a rear side (or a tail portion or side) that is located opposite the front side. The central body 10 may include a left side and a right side. The front, rear, left, and right sides and directions are shown in FIG. 1.

The UAV 100 may include a plurality of landing stands 185 configured to support the central body 10 when the UAV 100 is landed on a surface, such as a ground, a floor, etc. The landing stands 185 may include any suitable number of legs, such as one, two, three, four, etc. The landing stands 185 can include any shape, including but not limited to the shape shown in FIG. 1. The landing stands 185 may be readily detached from the central body 10 for easy transportation and/or storage.

The UAV 100 includes a plurality of arms coupled to the central body 10. In some embodiments, the UAV 100 includes six arms, as shown in FIG. 1. In other embodiments, the UAV 100 may include any suitable number of arms, such as two, three, four, five, seven, eight, etc. In the embodiment shown in FIG. 1, the six arms include a first arm 101 (or a front arm), a second arm 102 (or a rear arm), a third arm 103 (or a front left arm), and a fourth arm 104 (or a rear left arm), a fifth arm 105 (or a front right arm), a sixth arm 106 (or a rear right arm). The first arm 101 is mounted to the front side (or head portion) of the central body 10. The second arm 102 is mounted to the rear side of the central body 10. The third arm 103 may be mounted to a front left side of the central body 10. The fourth arm 104 may be mounted to a rear left side of the central body 10. The fifth arm 105 may be mounted to the front right side of the central body 10. The sixth arm 106 may be mounted to the rear right side of the central body 10.

Each arm may have a length measured from a mounting point or a joint with a frame at the central body 10 to a tip portion (also referred to as a free end) of the arm. For example, the first arm 101 may have a first length, the second arm 102 may have a second length, the third arm 103 may have a third length, the fourth arm 104 may have a fourth length, the fifth arm 105 may have a fifth length, and the sixth arm 106 may have a sixth length.

In some embodiments, lengths of two of the arms respectively coupled to a front side and a rear side of the frame of the central body 10 are shorter than lengths of the remainder of the arms respectively coupled to a left side and a right side of the frame of the central body 10. For example, in some embodiments, the lengths of the first arm 101 and the second arm 102 are shorter than lengths of the third arm 103, the fourth arm 104, the fifth arm 105, and the sixth arm 106. In some embodiments, each of the first length and the second length is shorter than each of the third length, the fourth length, the fifth length, and the sixth length.

In some embodiments, the first length is about or substantially the same as the second length. In some embodiments, the third length is about or substantially the same as the fifth length. In some embodiments, the fourth length is about or substantially the same as the sixth length. In some embodiments, the third length is about or substantially the same as the fourth length. In some embodiments, the fifth length is about or substantially the same as the sixth length. In some embodiments, the third length, the fourth length, the fifth length, and the sixth length are about or substantially the same.

In some embodiments, a first subset of the arms are coupled to a head portion (e.g., front side or portion) of the central body 10, a second subset of the plurality of arms are coupled to a tail portion (e.g., rear side or portion) of the central body 10. Each subset may include three arms comprising a middle arm and two side arms located on both sides of the middle arm, and a length of the middle arm is shorter than lengths of the two side arms.

Each arm may be mounted to a frame of the central body 10 at an arm mounting height measured relative to a same reference point, such as a lower contacting surface of the landing stands 185 (e.g., the surface that contacts the ground, floor, etc., when the UAV 100 is not in operation). For example, the first arm 101 may be mounted to a frame of the central body 10 at a first arm mounting height, the second arm 102 may be mounted to the frame of the central body 10 at a second arm mounting height, the third arm 103 may be mounted to the frame of the central body 10 at a third arm mounting height, the fourth arm 104 may be mounted to the frame of the central body 10 at a fourth arm mounting height, the fifth arm 105 may be mounted to the frame of the central body 10 at a fifth arm mounting height, and the sixth arm 106 may be mounted to the frame of the central body 10 at a sixth arm mounting height.

In some embodiments, each of the first arm mounting height, the third arm mounting height, and the fifth arm mounting height is greater than each of the second arm mounting height, the fourth arm mounting height, and the sixth arm mounting height. In some embodiments, the third arm mounting height is about or substantially the same as the fifth arm mounting height. In some embodiments, the fourth arm mounting height is about or substantially the same as the sixth arm mounting height. In some embodiments, each of the third arm mounting height and the fifth arm mounting height is greater than the first arm mounting height. In some embodiments, the first arm mounting height is greater than the second arm mounting height. In some embodiments, the second arm mounting height is greater than each of the fourth arm mounting height and the sixth arm mounting height. In some embodiments, the first arm mounting height, the third arm mounting height, and the fifth arm mounting height may be the same, and the second arm mounting height, the fourth arm mounting height, and the sixth arm mounting height may be the same. Other height configurations may also be used for the arms.

In some embodiments, at least one of the first arm 101 coupled to the front side of the frame of the central body 10, the third arm 103 coupled to the front left side of the frame of the central body 10, or the fifth arm 105 coupled to the front right side of the frame of the central body 10 is mounted to the central body 10 at an arm mounting height relative to the landing stands 185 lower than an arm mounting height of at least one of the second arm 102 coupled to the rear side of the frame of the central body 10, the fourth arm 104 coupled to the rear left side of the frame of the central body 10, and or the sixth arm 106 coupled to the rear right side of the frame of the central body 10. In other words, in some embodiments, at least one of the first arm mounting height, the third arm mounting height, or the fifth arm mounting height is lower than at least one of the second arm mounting height, the fourth arm mounting height, or the sixth arm mounting height.

As shown in FIG. 1, the UAV 100 may also include a first antenna 110. In some embodiments, the first antenna 110 may be a real-time kinematic ("RTK") antenna configured to receive positioning data from another device, such as a global positioning system ("GSP") satellite. An RTK antenna may use carrier-based ranging to provide ranges (and therefore positions). For example, the RTK antenna may calculate the ranges based on the number of carrier cycles between a satellite and a rover station, and a carrier wavelength. In some embodiments, the first antenna 110 may be other positioning antenna that can receive positioning data from another device that may be used by the UAV 100 to determine the location of the UAV 100. The first antenna 110 may be mounted on the central body 10 of the UAV 100 (such as a main frame of the UAV 100) at any suitable upper location where the antenna can receive signals, for example, the GPS signals.

The UAV 100 may be communicatively coupled with a remote control through wireless communication. The remote control may be a ground station including a transceiver for transmitting signals to and receiving signals from the UAV 100. The ground station may include a computer, which may include at least one of a processor, a memory, a storage device, or a display configured to display images and/or videos transmitted from the UAV 100. In some embodiments, the remote control may be a mobile user terminal, such as a cell phone, a tablet, a laptop, etc. The remote control may be a dedicated controller based on radio frequency, such as 900 MHz, 2.4 GHz, or 5.8 GHz. The dedicated controller may or may not be provided with a display for displaying images and/or videos captured by an imaging device mounted on the UAV 100.

In some embodiments, the UAV 100 may include one or more second antennas 115 configured to communicate with the remote control. The one or more second antennas 115 may include a software defined radio ("SDR") antenna. The SDR antenna may be configured to transmit images and/or videos captured by an imaging device carried by the UAV 100 to the remote control. For example, the SDR antenna may transmit live stream of images and/or videos captured by the imaging device to the remote control. In the embodiment shown in FIG. 1, the one or more second antennas 115 may be mounted to one or more of the arms, such as the fourth arm 104 and the sixth arm 106, and may point downward. The one or more second antennas 115 may be mounted to any suitable locations on the UAV 100.

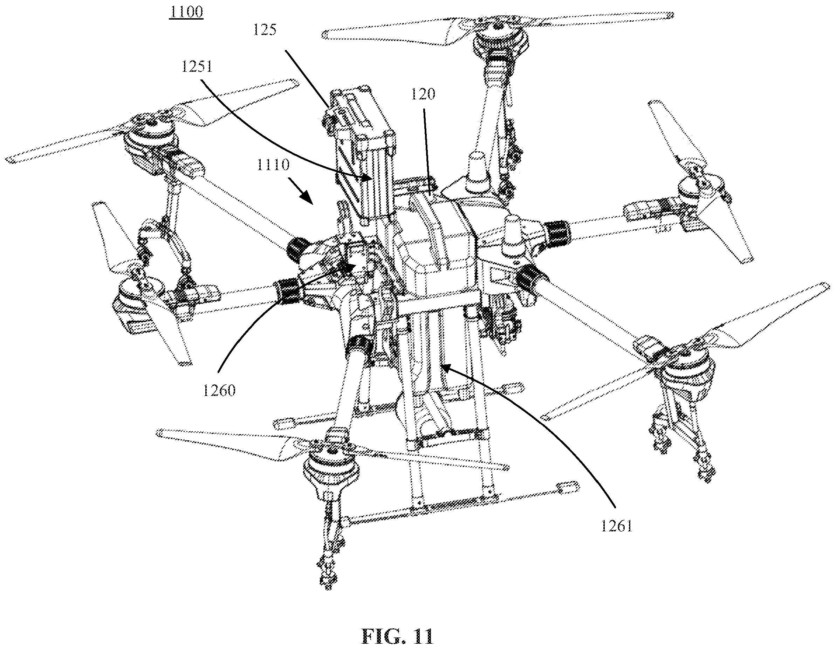

In some embodiments, the UAV 100 may include a fluid tank 120. The fluid tank 120 may be detachably coupled with the central body 10 of the UAV 100. Any suitable quick-release mechanism may be used to detachably mount the fluid tank 120 to the central body 10 of the UAV 100. Examples of the structures for holding the fluid tank 120 and a power supply are discussed below in connection with FIGs. 11-14.

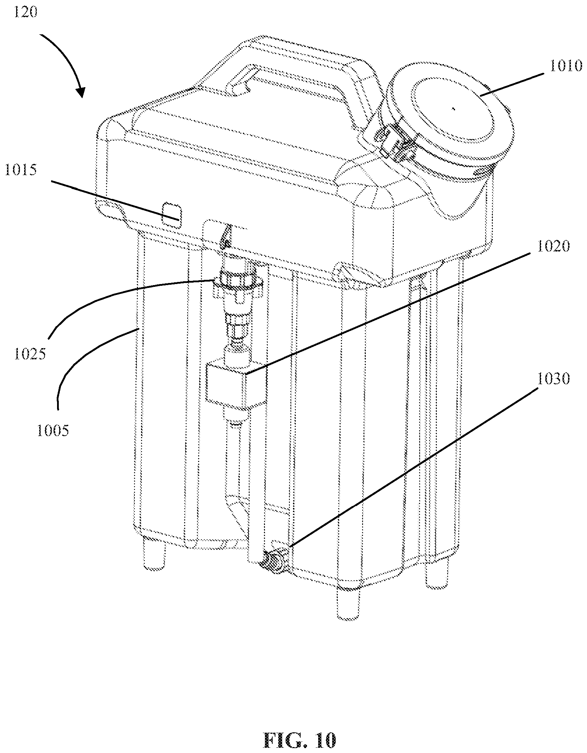

An example fluid tank 120 is shown in FIG. 10. The fluid tank 120 may be configured to store a fluid to be sprayed by the UAV 100, such as a liquid fertilizer, an insect killer chemical, or a fire extinguishing agent. The fluid tank 120 may be made of any suitable material, such as plastic or another light-weight and durable material. The fluid tank 120 may include a tank central body 1005. The fluid tank 120 may include a cap 1010 disposed at a top portion of the tank central body 1005. The cap 1010 may be securely engaged with an opening of the central body 1005 to seal the fluid tank 120. The present disclosure does not limit the mechanism through which the cap 1020 is engaged or disengaged with the central body 1005. The mechanism for engaging or disengaging the cap 1020 may include screw, snap-fit, etc. When the cap 1010 is disengaged from the central body 1005 of the fluid tank 120, a user may perform various maintenance of the fluid tank, including, for example, cleaning the inside of the fluid tank 120, or refilling the fluid tank 120 with a fluid. Thus, a manual refill may be performed by disassembling the cap 1010 from the fluid tank 120. The fluid tank 120 may be insertable into the central body 10 from a top portion of the central body 10 along a yaw-axis direction (shown in FIG. 1).

In some embodiments, the fluid tank 120 may include a flow meter 1020. In some embodiment, the flow meter 1020 may not be included as part of the fluid tank 120. Instead, the flow meter 1020 may be provided on the central body 10 of the UAV 100, and may be fluidically coupled to the fluid tank 120. For example, regardless of whether the flow meter 1020 is provided as part of the fluid tank 120, the flow meter 1020 may be provided external to the fluid tank 120. In some embodiments, the flow meter 1020 may be an electromagnetic flow meter that uses a flow determination method based on changes in the electromagnetic field caused by the fluid flowing through the meter. The flow meter 1020 may not have a part disposed inside the fluid tank 120.

In some embodiments, the flow meter 1020 may be coupled to a coupling interface 1025 provided on the central body 1005 of the fluid tank 120. The coupling interface 1025 may also be referred to as a fluid refill port. The fluid refill port detachably coupled to the fluid tank 120 and connectable, after being detached from the fluid tank 120, to a fluid refill station to receive a refill of the fluid. In addition, the flow meter 1020 may be fluidically coupled with an outlet 1030 of the fluid tank 120 through a tube or pipe. The flow meter 1020 may be disposed between the outlet 1030 and the coupling interface 1025.

The flow meter 1020 may be configured to measure or record the volume or rate of the flow of the fluid that has flown through the flow meter 1020. The flow meter 1020 may transmit, through a wired or wireless communication, the measured or recorded volume or rate of the flow of the fluid, to a processor included in the UAV 100. The processor of the UAV 100 may calculate the volume of fluid that has been sprayed or that remains in the fluid tank 120. When the volume of the fluid that has been sprayed or that remains in the fluid tank 120 is greater than or smaller than a predetermined the threshold, the processor of the UAV 100 may generate an alert message or signal, which may be transmitted to a remote control of the UAV 1 00. Upon receiving the alert message or signal, a user or operator of the UAV 100 may be alerted to operate the UAV 100 to return for a refill of the fluid.

In some embodiments, the coupling interface 1025 may be disposed at an upper or middle position on an outer wall of the fluid tank 120. The flow meter 1020 may be coupled to the coupling interface through any suitable mechanism, such as threads or snap-fit. The flow meter 1020 may be readily detachable from the coupling interface 1025. For example, when the fluid tank 120 needs refill, the flow meter 1020 may be detached from the coupling interface 1025. When the fluid tank 120 needs refill, if necessary, the fluid tank 120 may be detached from the central body 10 of the UAV 100 by disengaging from the central body 10 of the UAV 100 through a quick-release mechanism. In some embodiments, the flow meter 1020 may be disengaged from the coupling interface 1025 after the fluid tank 120 is detached from the central body 10. A person of ordinary skill in the art can appreciate that in some embodiments, the fluid tank 120 may not be detached from the central body 10 during a refill operation.

In some embodiments, during a refill operation, the coupling interface 1025 may be connected to a refill station, such as a refill hose of the refill station, to receive a refill of the fluid. In some embodiments, the flow meter 1020 may be connected to the refill station to receive a refill of the fluid. In some embodiments, when the fluid tank 120 needs cleaning, the coupling interface 1025 may also be connected to a hose of a cleaning station to receive water or another fluid to clean the inside of the fluid tank 120. In some embodiments, the flow meter 1020 may be connected to a hose of a cleaning station to receive water or another fluid to clean the inside of the fluid tank 120. In some embodiments, the refill or cleaning fluid may flow through the flow meter 1020, which may measure the volume of the fluid flown into the inside of the fluid tank 120, or may measure the volume of the fluid existing in the inside of the fluid tank 120.

In some embodiments, the refill or the cleaning operations may be performed automatically. When a predetermined volume of fluid has been flown into the fluid tank 120 or when the fluid inside the fluid tank 120 has reached a predetermined volume, the refill of the fluid or filling of the cleaning fluid may be automatically shut off. For example, when the coupling interface 1025 is coupled to the refill station, the refill may automatically start without further manual operations. The refill may automatically terminate when a sensor inside the hose from the refill station detects that a predetermined volume has been reached inside the fluid tank 120. Thus, the fluid tank 120 may be operated in either the manual refill mode or the automatic refill mode. The automatic refill mode reduces the time spent in refilling the fluid tank 120, thereby improving the operating efficiency of the UAV 110 during an application, such as for agricultural spray application.

In some embodiments, the outlet 1030 may be provided on or adjacent a bottom portion of the fluid tank 120. For example, the outlet 1030 may be a hole provided on the bottom or side portion of the fluid tank 120. In the embodiment shown in FIG. 10, the fluid tank 120 may also include a near-field communication ("NFC") tag 1015 mounted to the central body of the fluid tank 120. The NFC tag 1015 may be scanned or read by another external device, e.g., a scanner or reader, through electro-magnetic waves or radio frequency, infrared, etc. The NFC tag 1015 may store identification information of the fluid tank 120, such as the model and/or item number of the fluid tank 120. In some embodiments, the stored identification information may also include information relating of the volume of the fluid tank 120, such as 4 liter tank, 8 liter tank, 12 liter tank, or 16 liter tank, which may be reflected in the model number or item number. Other information relating to the fluid tank 120 may also be included in the identification information stored in the NFC tag 1015.

Referring to FIG. 1, the UAV 100 may include a power supply 125. The power supply 125 may be mounted to the central body 10 of the UAV 100. In some embodiments, the power supply 125 may be detachably mounted to the central body 10, and may be detached from the central body 10 for maintenance, such as replacement. The power supply 125 may be detachably mounted to the central body 10 through any suitable mechanism, such as a quick-release mechanism. In addition, the power supply 125 and the fluid tank 120 may be independently. In other words, in some embodiments, detaching of the power supply 125 may not require detaching the fluid tank 120, and vice versa. In some embodiments, the power supply 125 may be insertable into the central body 10 from a top portion of the central body 10 along the yaw-axis direction.

In some embodiments, the power supply 125 may include a battery. The battery may be any suitable battery, such as a rechargeable battery, a non-rechargeable battery, an alkaline battery, a Lithium Ion battery, a Nickel-Metal Hydride battery, a Nickel Cadmium battery, a lead acid battery, a Lithium Ion Polymer battery, etc. In some embodiments, the power supply 125 may include a solar panel and a battery. The solar panel may be configured to convert solar energy into electricity, which may be stored in the battery. The power supply 125 may include any other suitable devices for providing the power to drive the propulsion assemblies included in the UAV 100.

In some embodiments, the UAV 100 may include a communication device 130. The communication device 130 may include any suitable communication device, such as a device that includes a transceiver configured to communicate with other devices, such as a remote control. In some embodiments, the communication device 130 may be configured to communicate a cellular telecommunication network or a satellite telecommunication network. For example, the communication device 130 may include a 4G or 4G Long Term Evolution ("LTE") communication chip, a 5G or 5G New Radio ("NR") communication chip. In some embodiments, the communication device 130 may include a Bluetooth communication device, a Wi-Fi communication device, or any other communication devices that may provide a suitable range of communication.

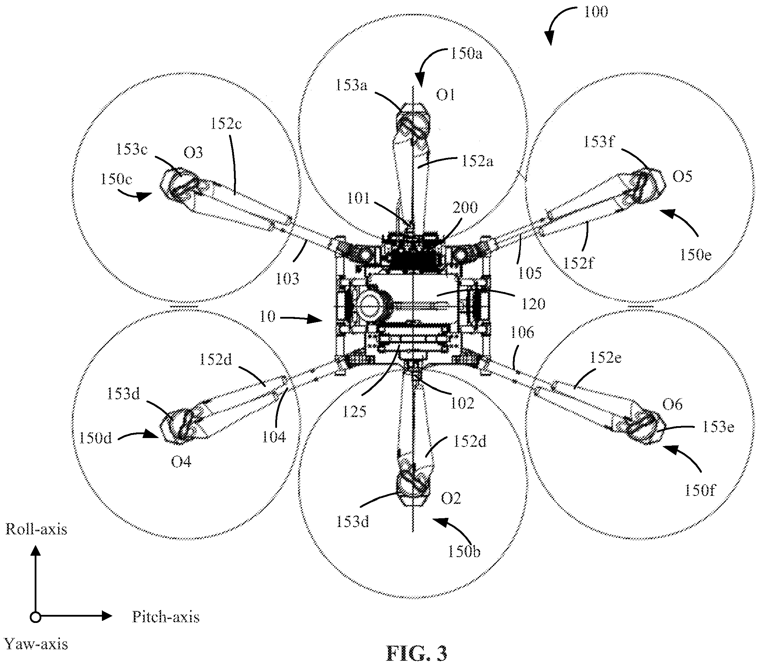

As shown in FIG. 1, the UAV 100 includes a propulsion system having a plurality of propulsion assemblies 150 (shown in FIG. 3 as 150a, 150b, 150c, 150d, 150e, 150f). Each propulsion assembly 150 may be mounted on a tip portion of each arm. Each propulsion assembly 150 may include a propeller 152 and a motor 153. As shown in FIG. 3, in some embodiments, the UAV 100 includes a first propulsion assembly 150a having a first propeller 152a and a first motor 153a, a second propulsion assembly 150b having a second propeller 152b and a second motor 153b, a third propulsion assembly 150c having a third propeller 152c and a third motor 153c, a fourth propulsion assembly 150d having a fourth propeller 152d and a fourth motor 153d, a fifth propulsion assembly 150e having a fifth propeller 152e and a fifth motor 153e, and a sixth propulsion assembly 150f having a sixth propeller 152f and a sixth motor 153f.

Each propeller may be mounted onto each motor, and each motor may be mounted onto each arm at a respective motor mounting height measured relative to a reference point, such as a bottom contacting surface of the landing stands 185. For example, the first motor may be mounted to the tip portion of the first arm 101 at a first motor mounting height, the second motor may be mounted to the tip portion of the second arm 102 at a second motor mounting height, the third motor may be mounted to the tip portion of the third arm 103 at a third motor mounting height, the fourth motor may be mounted to the tip portion of the fourth arm 104 at a fourth motor mounting height, the fifth motor may be mounted to the tip portion of the fifth arm 105 at a fifth motor mounting height, and the sixth motor may be mounted to the tip portion of the sixth arm 106 at a sixth motor mounting height.

In some embodiments, each of the first motor mounting height, the third motor mounting height, and the fifth motor mounting height may be greater than each of the second motor mounting height, the fourth motor mounting height, and the sixth motor mounting height. In some embodiments, the third motor mounting height is about or substantially the same as the fifth motor mounting height. In some embodiments, the fourth motor mounting height is about or substantially the same as the sixth motor mounting height. In some embodiments, each of the third motor mounting height and the fifth motor mounting height may be greater than the first motor mounting height. In some embodiments, the first motor mounting height may be greater than the second motor mounting height. In some embodiments, the second motor mounting height may be greater than each of the fourth motor mounting height and the sixth motor mounting height. In some embodiments, the first motor mounting height, the third motor mounting height, and the fifth motor mounting height are substantially the same and are higher than the second motor mounting height, the fourth motor mounting height, and the sixth motor mounting height, which may also be substantially the same.

Each propeller is mounted on each motor. Therefore, each propeller has a propeller mounting height with respect to a same reference point, such as the bottom contacting surface of the landing stands 185. The first propeller may be mounted to the first arm (through the first motor) at a first propeller mounting height. The second propeller may be mounted to the second arm (through the second motor)at a second propeller mounting height. The third propeller may be mounted to the third arm (through the third motor) at a third propeller mounting height. The fourth propeller may be mounted to the fourth arm (through the fourth motor) at a fourth propeller mounting height. The fifth propeller may be mounted to the fifth arm (through the fifth motor) at a fifth propeller mounting height. The sixth propeller may be mounted to the sixth arm (through the sixth motor) at a sixth propeller mounting height.

In some embodiments, each of the first propeller mounting height, the third propeller mounting height, and the fifth propeller mounting height may be greater than each of the second propeller mounting height, the fourth propeller mounting height, and the sixth propeller mounting height. In some embodiments, the third propeller mounting height is about or substantially the same as the fifth propeller mounting height. In some embodiments, the fourth propeller mounting height is about or substantially the same as the sixth propeller mounting height. In some embodiments, each of the third propeller mounting height and the fifth propeller mounting height is greater than the first propeller mounting height, the first propeller mounting height is greater than the second propeller mounting height, and the second propeller mounting height is greater than each of the fourth propeller mounting height and the sixth propeller mounting height. In some embodiments, the first propeller mounting height, the third propeller mounting height, and the fifth propeller mounting height are substantially the same, and are greater than the second propeller mounting height, the fourth propeller mounting height, and the sixth propeller mounting height, which may also be substantially the same.

In some embodiments, each propeller 152 may include one or more blades. For example, as shown in FIG. 1, the propeller 152 may include two blades, which may be folded to be disposed adjacent one another when not in operation to reduce the volume the UAV 100 for easy storage or transportation. In some embodiments, the propeller 152 may include a single-piece blade. In some embodiments, the propeller 152 may include other suitable number of blades, such as three, four, etc.

In some embodiments, each propulsion assembly 150 may include a blade clip 151 configured to secure the propeller 152 to the motor 153, such as the rotating shaft of the motor 153. The motor 153 may include any suitable motor, such as a direct current motor or an alternating current motor. The motor 153 may be a brushed motor, or a brushless motor. In some embodiments, each propulsion assembly 150 may include a protective cover 154 configured to cover at least a portion of the motor 153.

The UAV 100 may include one or more electrical speed controls ("ESC") 160. In some embodiments, each propulsion assembly 150 may include an ESC 160. Therefore, in the embodiment shown in FIG. 1, the UAV 110 may include six ESCs 160. In some embodiments, the UAV 100 may include any suitable number of ESCs 160, such as one, two, three, four, five, etc. In some embodiments, in each propulsion assembly, the motor 153 may be electrically coupled between the ESC 160 and the propeller 152. The ESC 160 may be configured or programmed to receive a driving signal from and generated by a flight control system included in a flight control board 200. The ESC 160 may be configured to provide a driving current to the motor 153 based on the driving signal received from the flight control system, thereby controlling a rotating speed of the motor 153. Each motor 153 may drive the propellers 152 to rotate, thereby providing propulsion forces for the flight of the UAV 100.

In some embodiments, each propulsion assembly 150 may include a light and a light cover. The light may be turned on when the UAV 100 is in operation. The light may provide various information to an operator, such as indicating to the operator various conditions of the UAV 100. In some embodiments, the light may also provide illumination to the work field.

In some embodiments, the UAV 100 may include a plurality of sprayers 170 coupled to the plurality of arms. For example, the plurality of sprayers 170 may be coupled to the arms under the propulsion assemblies 150. In some embodiments, as shown in FIG. 1, each sprayer 170 may be coupled to a lower surface of a tip portion of an arm. Each arm may be mounted with one or more sprayers 170. Each sprayer 170 may include a conduit extending from the fluid tank 120 along the length of the arm to supply the fluid. The sprayer 170 may also include a spray nozzle 172 connected with the conduit to receive the fluid. The spray nozzle or nozzle head 172 may be coupled with the lower surface of the tip portion of the arm through a tube 171, such as a metal or plastic tube. The spray nozzle 172 may be mounted at a lower portion of the tube 171. The tube 171 may vertically extend perpendicularly to the lower surface of the tip portion of the arm. The spray nozzle 172 may be any suitable nozzle, such as a pressurized nozzle or a centrifugal nozzle. In some embodiments, the centrifugal nozzle may have a rotating disk having a diameter of about 0.6 m, a rotating speed at about 8000 - 16000 rpm (rounds per minute). The flow rate of the fluid supplied to the sprayer nozzle 172 may be 1.2 L/min. Each spray nozzle 172 may be fluidly coupled with the fluid tank 120 for spraying the fluid stored in the fluid tank 120. In some embodiments, at least one spray nozzle 172 is disposed below each tip portion of each arm and coupled to a lower surface of each tip portion through the rigid tube.

In some embodiments, the UAV 100 may include one or more pumps 180. The one or more pumps 180 may be disposed on the central body 10 of the UAV 100 adjacent the fluid tank 120. The one or more pumps 180 may be configured to pump the fluid from the fluid tank 120 to the sprayers 170 distributed on the arms. The one or more pumps 180 may include any suitable pumps, such as, for example, one or more of a positive displacement pump, a centrifugal pump, a roto-dynamic pump, a rotary positive displacement pump, such as a gear pump, a screw pump, a rotary vane pump. In some embodiments, the one or more pumps 180 may also include one or more of a reciprocating positive displacement pump, such as a plunger pump, a diaphragm pump, a piston pump, a radial piston pump, etc.

In some embodiments, the UAV 100 may include two or more radars 190 disposed on left and right sides of the UAV 100 and configured to detect an object in a predetermined direction (e.g., the left direction and the right direction of the UAV 100). For example, the UAV 100 may include a first radar disposed on a left side facing the left, and a second radar disposed on a right side facing the right. The radars 190 may be mounted to the central body 10 or the landing stands 185 of the UAV 100. In some embodiments, the two radars 190 may be mounted to the two landing stands 185 on the left side and the right side. The radars 190 may be configured to detect an obstacle on the sides of the UAV 100 in predetermined directions. When the radars 190 detect an obstacle on one or both sides of the UAV 100, the UAV 100 may take measure to circumvent or avoid the obstacle, for example, by changing the flight path or route, changing speed, braking, etc.

FIG. 2 is another perspective view of the UAV 100, showing additional elements of the UAV 100. In some embodiments, the UAV 100 may include a pump control board. The pump control board may be disposed on the central body 10 of the UAV 100. The pump control board may be configured to control one or more pumps, including the pump 180, thereby controlling the supply of the fluid from the fluid tank 120 to the plurality of sprayers 170. The pump control board may include one or more of electrical circuits, chips, logic gates, converters, amplifiers, etc. The pump control board may be configured to receive a control signal from a processor included in the UAV 100, or from a remote control communicatively coupled with the UAV 100.

In some embodiments, the UAV 100 may include a flight control board 200. The flight control board 200 may be disposed at a front side of the central body 10 of the UAV 100. In other words, in the present disclosure, the font side of the UAV 100 may be defined as the side where the flight control board 200 is disposed. The rear side is the side opposite the front side. As shown in FIG. 2, the first arm 101 is mounted to the front side of the UAV 100. The flight control board 200 may include at least one of a processor, a memory, or a circuit. The memory may be configured to store computer-executable instructions or codes. The processor may be configured or programmed to access the memory to execute the instructions to process data and/or signals, so as to perform various operations related to the flight of the UAV 100, and other operations, such as the spraying of the fluid. In some embodiments, the flight control board 200 may be configured or programmed to control various flight related operations of the UAV 100, such as the velocity (e.g., speed and direction), flying height, and attitude (e.g., the pitch angle, the roll angle, the yaw angle) of the UAV 100. In some embodiments, the flight control board 200 may also be configured to provide other controls, such as controlling an imaging device to capture images and/or videos, controlling the sprayers 170 to spray the fluid, controlling the power supply 125, controlling the communications provided by the various antenna and communication devices.

In some embodiments, the UAV 100 may include a first person view ("FPV") device. The FPV device may be mounted to the central body 10 of the UAV 100. The FPV device may be configured to provide signals to a remote control on the ground to enable the operator to have the first person view of the scene captured by the imaging device.

In some embodiments, the UAV 100 may include a third radar 210 disposed at a lower portion of the central body 10 and configured to detect an object in a predetermined direction (e.g., multiple directions). The third radar 210 may be a rotational radar, which rotates to scan the surroundings in different directions. For example, the third radar 210 may be configured to scan an area below the UAV 100 when the UAV 100 is in the air, thereby detecting objects (such as obstacles, buildings, ground, etc.) below the UAV 100. In some embodiments, the third radar 210 may be mounted to the central body 10. In some embodiments, the third radar 210 may be mounted to the landing stands 185.

As shown in FIG. 2, in some embodiments, the central body 10 of the UAV 100 may include a plurality of frames coupled together. For example, the central body 10 may include at least a front frame 215, a middle frame 220, and a rear frame 225. Each frame may be made of a suitable material, such as plastic, steel, aluminum, carbon tube, or a composite material. In some embodiments, some of the frames may be made of a light-weight material that also satisfies a strength requirement. The frames may be mechanically coupled with one another through suitable joints and couplings. Other components, such as the arms, the radars, the fluid tank, the power supply, etc., may be mechanically coupled with one of the frames included in the central body 10.

In some embodiments, the front side of the central body 10 of the UAV 100 is provided with the flight control board 200. The middle portion of the central body 10 is provided with the fluid tank 120, and the rear portion of the central body 10 is provided with the power supply 125. The fluid tank 120 may be readily detached from the middle portion of the central body 10, such that the fluid tank 120 may be refilled, replaced, or maintained (e.g., cleaned). The power supply 125 may be readily detached from the rear portion of the central body 10. The fluid tank 120 and the power supply 125 may be independently detachable from the central body 10 without interfering with each other, or without requiring the other one to be detached first.

FIG. 3 is a top view of the UAV 100 when the arms are in an extended state. In the extended state shown in FIG. 3, the six arms 101-106 radially extend from the central body 10. Each arm is mounted with a propulsion assembly 150a, 150b, 150c, 150d, 150e, or 150f. The propulsion assemblies 150a-150f may be mounted on the arms at tip potions represented by points 01-06. Each propulsion assembly 150a, 150b, 150c, 150d, 150e, or 150f may include a motor 153a, 153b, 153c, 153d, 153e, or 153f. Each propeller 152a, 152b, 152c, 152d, 152e, or 152f is mounted to a corresponding motor. Each propeller may have two blades that are folded when not in operation.

As shown in FIG. 3, the first arm 101 is coupled to the front side of the central body 10 of the UAV 100, where the flight control board 200 is disposed. The second arm 102 is coupled to the rear side of the central body 10 of the UAV 100, where the power supply 125 is disposed. The third arm 103 and the fourth arm 104 are coupled to the left side of the central body 10 of the UAV 100. The third arm 103 is coupled to the front left side of the central body 10. The fourth arm 104 is coupled to the rear left side of the central body 10. The fifth arm 105 and the sixth arm 106 are coupled to the right side of the central body 10 of the UAV 100. The fifth arm 105 is coupled to the front right side of the central body 10. The sixth arm 106 is coupled to the rear right side of the central body 10.

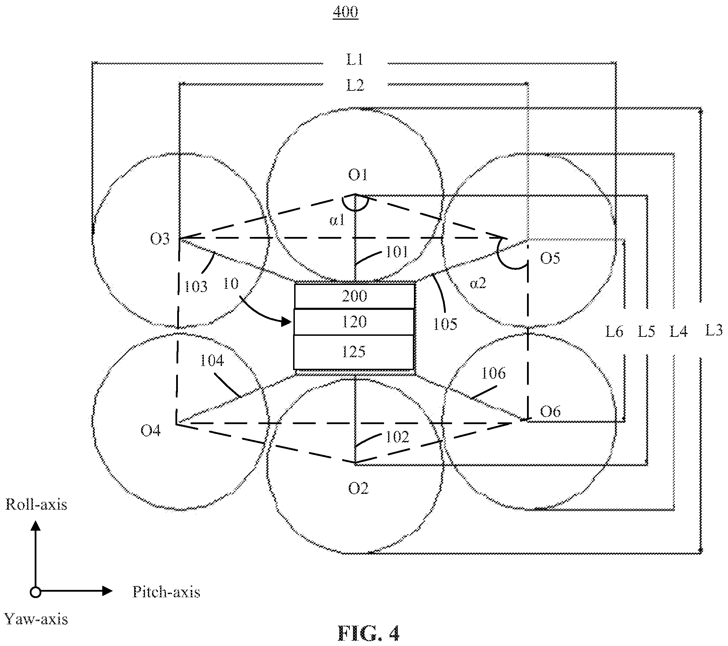

FIG. 4 is a schematic diagram of a top view of the UAV 100. FIG. 4 may also represent a schematic configuration of the UAV 100 in a horizontal plane projection. As shown in FIG. 4, in an extended state, the first arm 101 and the second arm 102 may extend substantially in parallel with a roll-axis of the UAV 100. In some embodiments, an axis connecting the first arm 101 and the second arm 102 in the extended state may coincide with the roll-axis. The mounting locations, the lengths and the configurations of the propulsion assemblies of the first arm 101 and the second arm 102 may be symmetric with respect to a pitch-axis of the central body 10. The arm mounting heights of the first arm 101 and the second arm 102 may or may not be the same, which is not reflected in FIG. 4 because FIG. 4 is a top view or a schematic horizontal plane projection of the UAV 100. In some embodiments, the arm mounting heights of the first arm 101 and the second arm 102 may be the same. In some embodiments, the arm mounting heights of the first arm 101 and the second arm 102 may be different (e.g., first arm 101 being mounted higher than second arm 102 or vice versa).

In the extended state, the third arm 103 may extend from the front left side of the central body 10 at an angle with respect to the roll-axis. The fifth arm 105 may extend from the front right side of the central body 10 at an angle with respect to the roll-axis. The mounting locations on the central body 10, the lengths, and the arm mounting heights of the third arm 103 and the fifth arm 105 may be symmetric with respect to the roll-axis of the central body 10.

In the extended state, the fourth arm 104 and the sixth arm 106 may each extend from the rear left side and the rear right side of the central body 10 at their respective angles. The mounting locations on the central body 10, the lengths, and the arm mounting heights of the fourth arm 104 and the sixth arm 106 may be symmetric with respect to the roll-axis of the central body 10.

The lengths and the mounting locations of the propulsion assemblies of the third arm 103 and the fourth arm 104 may be symmetric with respect to the pitch-axis of the central body. The arm mounting heights of the third arm 103 and the fourth arm 104 may or may not be the same. In some embodiments, the arm mounting heights of the third arm 103 and the fourth arm 104 may be the same. In some embodiments, the arm mounting heights of the third arm 103 and the fourth arm 104 may be different (e.g., third arm 103 being mounted higher than fourth arm 104 or vice versa).

Similarly, the lengths and the mounting locations of the propulsion assemblies of the fifth arm 105 and the sixth arm 106 may be symmetric with respect to the pitch-axis of the central body 10. The arm mounting heights of the fifth arm 105 and the sixth arm 106 may or may not be the same. In some embodiments, the arm mounting heights of the fifth arm 105 and the sixth arm 106 may be the same. In some embodiments, the arm mounting heights of the fifth arm 105 and the sixth arm 106 may be different (e.g., fifth arm 105 being mounted higher than sixth arm 106, or vice versa).

The points O1, O2, O3, O4, O5, and O6 represent the tip portions of the arms, where the propulsion assemblies 150 are mounted. As shown in FIG. 4, when the arms are in an extended state, and when the tip portions O1, O2, O3, O4, O5, and O6 of the arms 101-106 are virtually connected and viewed from above a top of the central body 10 (as shown in the top view shown in FIG. 4), the connection forms a polygon, such as a non-regular hexagon. In the non-regular hexagon, the inner angles α1 corresponding to the tip portion O1 of the first arm 101 and the tip portion O2 of the second arm 102, are greater than 120°, and inner angles α2 corresponding to the tip portions O3, O4, O5, and O6 of the third arm 103, the fourth arm 104, the fifth arm 105, and the sixth arm 106, are less than 120°. The inner angles α1 corresponding to the tip portions O1 and O2 may be the same. The inner angles α2 corresponding to the tip portions O3, O4, O5, and O6 may be the same. As one of ordinary skill in the art would appreciate, for a regular hexagon, all of the inner angles corresponding to O1, O2, O3, O4, O5, and O6 are the same, which are 120°.

As shown in FIG. 4, in an extended state, when tip portions O3, O4, O5, and O6 of the third arm 103, the fourth arm 104, the fifth arm 105, and the sixth arm 106 are virtually connected and viewed from a top of the central body 10 (e.g., top view shown in FIG. 4), the connection forms a rectangle. A length direction of the rectangle (e.g., the 04-06 direction) may be substantially parallel to a pitch-axis of the unmanned aerial vehicle. The third arm 103, the fourth arm 104, the fifth arm 105, and the sixth arm 106 may be symmetrically disposed with respect to a roll-axis and the pitch-axis (without considering the arm mounting heights).

Because the motors are mounted at the tip portions 01-06, the center of the motors correspond to the tip portions 01-06. Thus, in an extended state, when the first motor, the second motor, the third motor, the fourth motor, the fifth motor, and the sixth motor are virtually connected, the connection forms a polygon. In some embodiments, a length of the polygon in a pitch-axis direction is greater than a length of the polygon in a roll-axis direction.

In some embodiments, in an extended state, when the third motor, the fourth motor, the fifth motor, and the sixth motor are virtually connected, the connection forms a rectangle. In some embodiments, a length direction of the rectangle is substantially parallel to a pitch-axis of the unmanned aerial vehicle. In some embodiments, the first motor and the second motor are disposed outside of the rectangle. In some embodiments, the third motor, the fourth motor, the fifth motor, and the sixth motor are symmetrically disposed with respect to a roll-axis and the pitch-axis.

Because the propellers are mounted to the motors, which are mounted at the tip portions 01-06 of the arms, the centers of the propellers correspond to the tip portions 01-06. Thus, in an extended state, when a center of the third propeller, a center of the fourth propeller, a center of the fifth propeller, and a center of the sixth propeller are virtually connected, the connection forms a rectangle. In some embodiments, a length direction of the rectangle is substantially parallel to a pitch-axis of the unmanned aerial vehicle. In some embodiments, a center of the first propeller and a center of the second propeller are located outside of the rectangle. In some embodiments, the center of the third propeller, the center of the fourth propeller, the center of the fifth propeller, and the center of the sixth propeller are symmetrically disposed with respect to a roll-axis and the pitch-axis. In an extended state, when a center of the first propeller, a center of the second propeller, a center of the third propeller, a center of the fourth propeller, a center of the fifth propeller, and a center of the sixth propeller are virtually connected, the connection forms a polygon. In some embodiments, a length of the polygon in a pitch-axis direction is greater than a length of the polygon in a roll-axis direction.

As shown in FIG. 4, the flight control board 200 is mounted to the frame of the central body 10 at the front side, the fluid tank 120 is mounted to the frame of the central body 10 in the middle section of the central body 10, and the power supply 125 is disposed at the rear side of the central body 10. As shown in FIG. 4, the flight control board 200, the fluid tank 120, and the power supply 125 are aligned in a straight line, with the flight control board 200 and the power supply 125 located at two opposite sides of the fluid tank 120. In some embodiments, the flight control board 200, the fluid tank 120, and the power supply 125 are aligned along a roll-axis. Although not shown, a person having ordinary skill in the art could appreciate that in some embodiments, the flight control board 200, the fluid tank 120, and the power supply 125 may be aligned along a pitch-axis.

FIG. 4 also shows example dimensions of the UAV 100. The dimensions shown in FIG. 4 are examples only. Other dimensions are possible, and the present disclosure does not limit the dimensions of the UAV 1 00. In some embodiments, the left-right span L1 of the UAV 1 00 when the propellers are rotating is about 2.504 meters (m), the distance L2 between the tip portions of the third arm 103 and the fifth arm 105 (or between the fourth arm 104 and the sixth arm 106) is about 1.665 m. The first front-rear outermost span L3 of the UAV 100, which corresponds to the front-most point of the rotating propeller and the rear-most point of the rotating propeller, is about 2.138 m. The second front-rear span L4, which corresponds to the front-most point of the rotating propeller installed at the fifth arm 105 and the rear-most point of the rotating propeller at the sixth arm 106, is 1.706 m. The second front-rear span L4 also corresponds to the front-most point of the rotating propeller installed at the third arm 103 and the rear-most point of the rotating propeller at the fourth arm 104. A distance L5 between the tip portion O1 of the first arm 101 where a propulsion assembly is mounted and the tip portion O2 of the second arm 102 where a propulsion assembly is mounted, is about 1.290 m. A distance L6 between the tip portion O5 of the fifth arm 105 where a propulsion assembly is mounted and the tip portion O6 of the sixth arm 106 where a propulsion assembly is mounted, is about 0.87 m. The distance L6 also corresponds to the distance between the tip portion O3 of the third arm 103 where a propulsion assembly is mounted and the tip portion O4 of the fourth arm 104 where a propulsion assembly is mounted.

During an agricultural application, when the UAV 100 is used to spray a fluid to a farm field, the UAV 100 may fly forward with the front side (where the flight control board 200 is disposed) facing the moving direction. When the UAV 100 flies forward, the sprayers 170 mounted on the second arm 102, the third arm 103, the fourth arm 104, the fifth arm 105, and the sixth arm 106 may be used to spray the fluid. The sprayer 170 mounted to the first arm 101 may not be used because the sprayed fluid droplet may be blown onto the flight control board 200 disposed at the front side of the UAV 100. When the UAV 100 flies backward, the sprayers 170 mounted on the first arm 101, the third arm 103, the fourth arm 104, the fifth arm 105, and the sixth arm 106 may be used to spray a fluid. The sprayer 170 mounted to the second arm 102 may not be used because the sprayed fluid droplet may be blown onto the power supply 125. The sprayer 170 may be configured to spray the fluid in a cone shape having a predetermine span that may cover the distance between two adjacent sprayers 170. In some embodiments, the UAV 100 may be operated at a flight height of 1.5-2.5m and a flight speed at 2 m/s - 5 m/s.

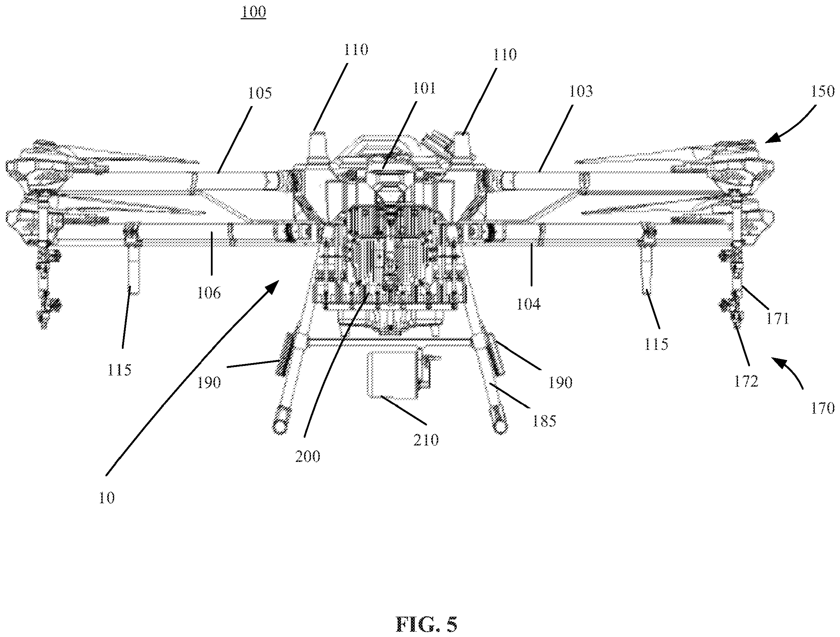

FIG. 5 is a front view of the UAV 100. As shown in FIG. 5, the flight control board 200 is disposed at the front side of the central body 10. The first and second radars 190 are mounted on the left and right landing stands 185, respectively. The third radar 210 is mounted at a lower portion of the UAV 100. For example, the third radar 210 may be mounted to a structure disposed between the landing stands 185, such as a bar connecting the left and right landing stands 185. In some embodiments, the third arm 103 and the fifth arm 105 are mounted to the central body 10 at a same arm mounting height. The fourth arm 104 and the sixth arm 106 are mounted to the central body 10 at a same arm mounting height. As shown in FIG. 5, the third arm 103 and the fifth arm 105 are mounted to the central body 10 at an arm mounting height higher than the arm mounting height of the fourth arm 104 and the sixth arm 106. FIG. 5 shows that the second antenna 115 are mounted to the fourth arm 104 and the sixth arm 106. FIG. 5 also shows that the sprayer 170 is mounted to the top portion of each arm, coupled to the arm through the tube 171. The spray nozzle 172 is mounted to the tube 171. In some embodiments, the tube 171 has a length of about 0.3 meter (m). In some embodiments, a distance between two adjacent spray nozzles 172 on the left side or the right side of the UAV 100 may be 0.832 m. FIG. 5 also shows two radars 190 disposed on the left and right sides of the UAV 100, each mounted on a landing stand 185.

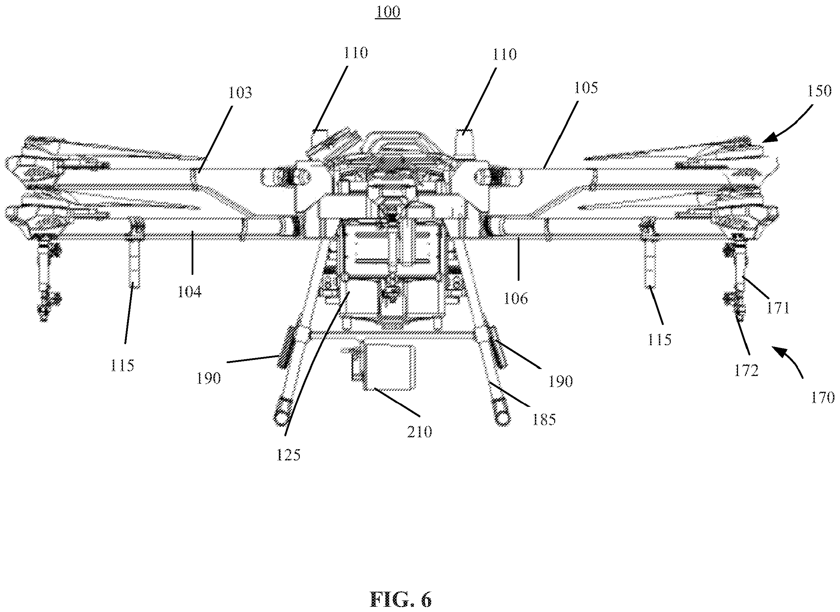

FIG. 6 is a rear view of the UAV 100. The rear side is a side where the power supply 125 is mounted. As shown in FIG. 6, the third arm 103 and the fifth arm 105 are coupled to the central body 10 at an arm mounting height that is higher than the arm mounting height of the fourth arm 104 and the sixth arm 106.

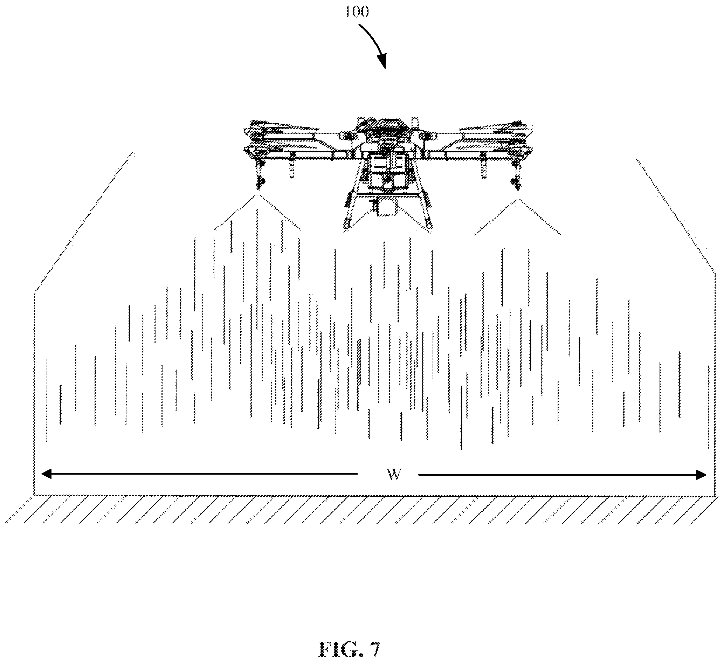

FIG. 7 is a schematic fluid droplets distribution field generated by the UAV 100. In the embodiment shown in FIG. 7, the left-right spray span W of the fluid droplets distribution field may be 6.5 m. Depending on the design parameters of the UAV 100, the left-right spray span W may achieve any suitable value, for example, 4 m, 5 m, 7 m, 8 m, 9 m, 10 m, etc.

Each of the arms 101-106 may be foldable and extendable. In some embodiments, the six arms may be independently foldable and extendable. In some embodiments, the arms are configured to transform between a flight configuration in which the arms are extended away from the central body and a compact configuration in which a first subset of the arms are folded toward a corresponding side of the central body, and a second subset of the arms are folded toward a lower portion of the central body. In some embodiments, each of the arms 101-106 may be folded or extended independently. The first arm 101 and the second arm 102 are vertically foldable and extendable between first positions where the first arm 101 and the second arm 102 radially extend from the front side and the rear side of the frame, and second positions where the first arm 101 and the second arm 102 extend vertically and are, preferably, disposed adjacent the landing stands 185. In some embodiments, the first arm 101 may be vertically foldable in a direction (e.g., a clockwise direction) from a radially extending position toward the landing stands 185, and the second arm 102 may be vertically foldable in an opposite direction (e.g., a counter-clockwise direction) from a radially extending position toward the landing stands 185. For example, in some embodiments, the first arm 101 and the second arm 102 are foldable toward a yaw-axis of the UAV 100. In a folded state the first arm 101 and the second arm 102 are folded such that the first arm 101 and the second arm 102 are substantially parallel to the yaw-axis of the UAV 100.

In some embodiments, the third arm 103, the fourth arm 104, the fifth arm 105, and the sixth arm 106 may be horizontally foldable and extendable. For example, the third arm 103 may be horizontally foldable in a direction (e.g., a counter-clockwise direction), the fourth arm 104 may be horizontally foldable in an opposite direction (e.g., a clockwise direction), the fifth arm 105 may be horizontally foldable in a direction (e.g., a clockwise direction), and the sixth arm 106 may be horizontally foldable in an opposite direction (e.g., a counter-clockwise direction). In some embodiments, when folded, the UAV 100 may have a dimension of 1.1 m x 0.723 m x 0.57 m, which makes it convenient for storage and transportation.

In some embodiments, the third arm 103 is foldable in a direction (e.g., a counter-clockwise direction) for more than 90 degrees from a radially extending position to a position where the third arm 103 is disposed adjacent the frame and extends in a direction substantially parallel with the axis connecting the first arm 101 and the second arm 102, e.g., the roll-axis. In some embodiments, the fourth arm 104 is foldable in an opposite direction (e.g., a clockwise direction) for more than 90 degrees from a radially extending position to a position where the fourth arm 104 is disposed adjacent the central body and extends in a direction substantially parallel with the axis connecting the first arm 101 and the second arm 102, e.g., the roll-axis.

In some embodiments, the third arm 103 and the fourth arm 104 are foldable and extendable through horizontal rotation relative to one another between first positions where the third arm 103 and the fourth arm 104 extend from the front left side and the rear left side of the frame, and second positions where the third arm 103 and the fourth arm 104 are disposed adjacent the frame and extend in a direction substantially parallel with an axis connecting the first arm 101 and the second arm 102. For example, the third arm 103 may be rotated toward the extended position of the fourth arm 104, and the fourth arm 104 may be rotated toward the extended position of the third arm 103.

In some embodiments, the fifth arm 105 and the sixth arm 106 are rotatable relative to one another in opposite directions between first positions where the fifth arm 105 and the sixth arm 106 extend from the front left side and the rear left side of the frame, and second positions where the fifth arm 105 and the sixth arm 106 are disposed adjacent the frame and extend in a direction substantially parallel with an axis connecting the first arm 101 and the second arm 102. For example, the fifth arm 105 may be rotated toward the extended position of the sixth arm 106, and the sixth arm 106 may be rotated toward the extended position of the fifth arm 105.

In some embodiments, the fifth arm 105 is foldable in a direction (e.g., a clockwise direction) for more than 90 degrees to a position where the fifth arm 105 is disposed adjacent the central body and extends in a direction substantially parallel with the axis connecting the first arm 101 and the second arm 102, e.g., the roll-axis. In some embodiments, the sixth arm 106 is foldable in an opposite direction (e.g., a counter-clockwise direction) for more than 90 degrees to a position where the sixth arm 106 is disposed adjacent the central body and extends in a direction substantially parallel with the axis connecting the first arm 101 and the second arm 102, e.g., the roll-axis.

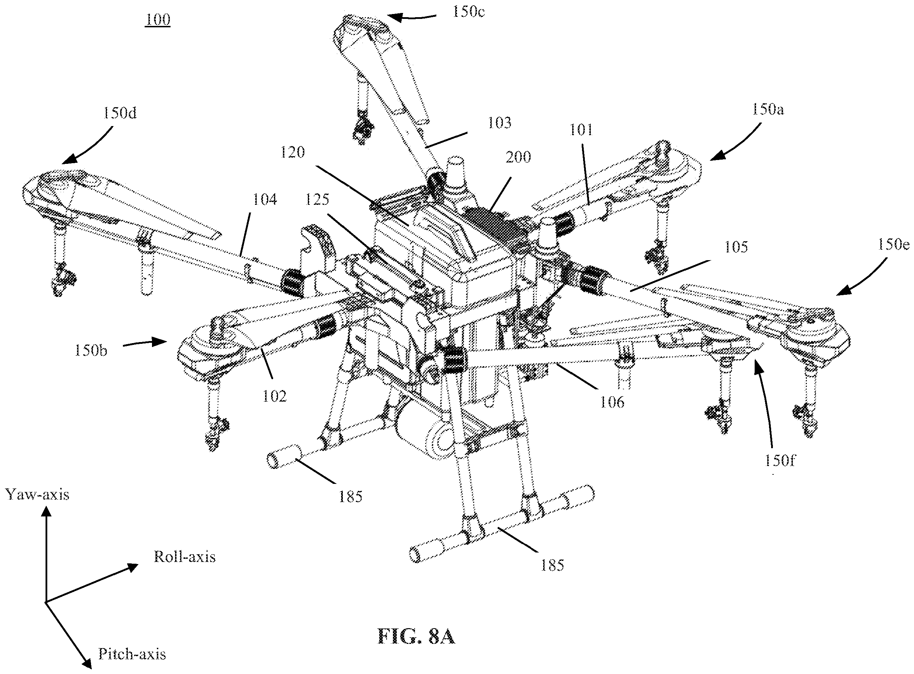

FIGs. 8A-8K illustrate an example folding process. The folding process is for illustration purposes only. A person having ordinary skill in the art can appreciate that at least some of the sequences may be in other orders. As shown in FIGs. 8A-8K, the arms may be folded with the sprayers 170 mounted thereon. As shown in FIGs. 8A-8K, the arms 101-106 are pivotably mounted to the central body 10. Each of the third arm 103, the fourth arm 104, the fifth arm 105, and the sixth arm 106 may be horizontally pivotable, such that they may be rotated horizontally to change positions between a first position where the arms are radially extended from the central body 10 to a second position where the arms are folded and disposed close to the central body 10 substantially in parallel with an axis connecting the first arm 101 and the second arm 102, e.g., the roll axis. Each of the first arm 101 and the second arm 102 are vertically pivotable, such that they may change positions between a first position where each of the first arm 101 and the second arm 102 radially extends from the central body 10 to a second position where each of the first arm 101 and the second arm 102 points downward, preferably toward the landing stands. In some embodiments, in the second position, each of the first arm 101 and the second arm 102 may be substantially in parallel with the yaw-axis.

FIG. 8A illustrate a perspective view of the UAV 100 in a partially folded state. As shown in FIG. 8A, the sixth arm 106 is folded horizontally from an extended state toward the front side of the UAV 100. In the embodiment shown in FIG. 8A, because the sixth arm 106 is mounted at an arm mounting height lower than the fifth arm 105, the sixth arm 106 may be folded prior to folding the fifth arm 105. When the sixth arm 106 is folded prior to the fifth arm 105, the sixth arm 106 does not interfere with the folding of the fifth arm 105 that has the sprayer 170 mounted thereon. In some embodiments, the fifth arm 105 that is mounted higher than the sixth arm 106 may be folded prior to the sixth arm 106. In some embodiments, the fifth arm 105 and the sixth arm 106 may be folded simultaneously. The sixth arm 106 may be rotated from a radially extended position toward the front side of the UAV 100 for more than 90 degrees until it reaches a position where the sixth arm 106 is disposed adjacent the central body 10, and substantially in parallel with an axis connecting the first arm 101 and the second arm 102, e.g., the roll-axis of the UAV 100.

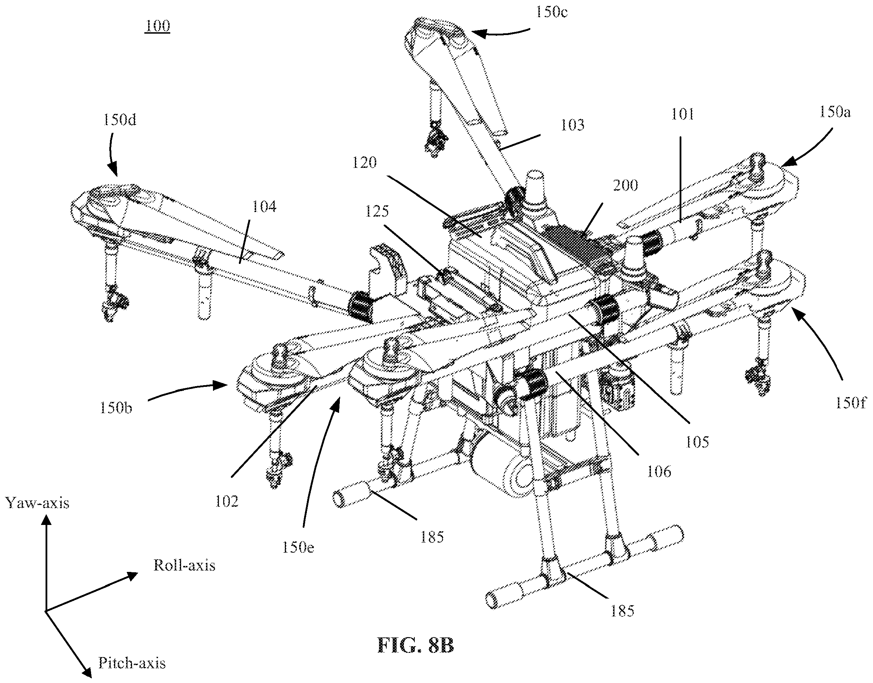

FIG. 8B illustrates a perspective view of the UAV 100 in another partially folded state. The fifth arm 105 may be horizontally folded toward the rear side of the UAV 100. In other words, the fifth arm 105 may be rotated clockwise from a radially extended position for over 90 degrees toward the rear side of the UAV 100. In the folded state, the fifth arm 105 is disposed adjacent the central body 10, and substantially in parallel with the axis connecting the first arm 101 and the second arm 102, e.g., the roll-axis of the UAV 100. In the folded state, the fifth arm 105 and the sixth arm 106 may be disposed substantially in parallel with one another. The fifth arm 105 and the sixth arm 106 may be disposed one over another at different heights.

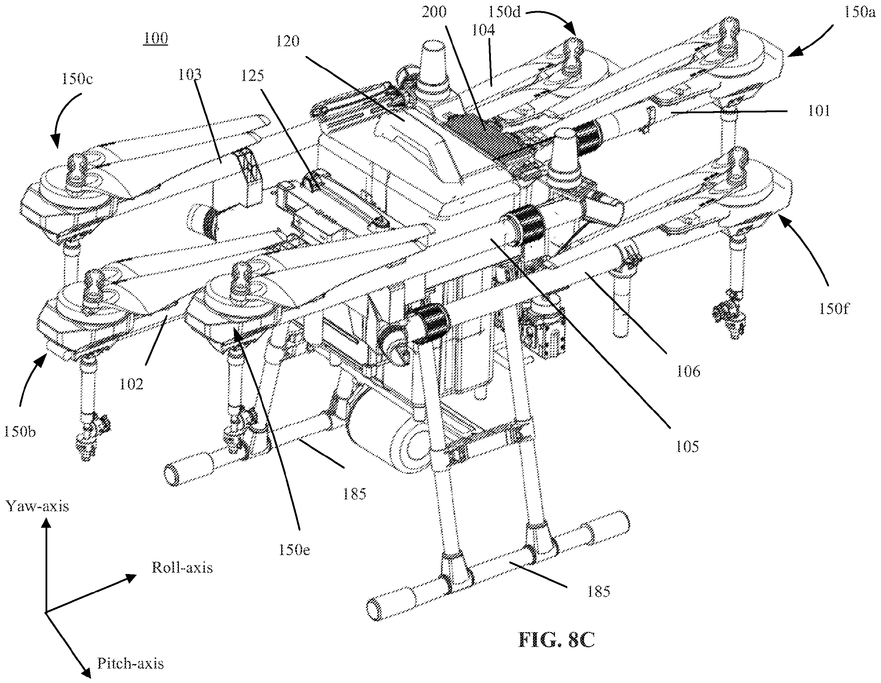

FIG. 8C illustrates a perspective view of the UAV 100 in another partially folded state. In this state, the third arm 103 and the fourth arm 104 have been completely folded. The third arm 103 may be horizontally folded from a radially extended position toward the rear side of the UAV 100. For example, the third arm 103 may be folded counter-clockwise for more than 90 degrees toward the rear side of the UAV 100. In the folded state, the third arm 103 may be disposed adjacent the central body 10, and substantially in parallel with the axis connecting the first arm 101 and the second arm 102, e.g., the roll-axis of the UAV 100. The fourth arm 104 may be horizontally folded from a radially extended position toward the front side of the UAV 100. For example, the fourth arm 104 may be folded clockwise for more than 90 degrees toward the front side of the UAV 100. In the folded state, the fourth arm 104 may be disposed adjacent the central body 10, and substantially in parallel with the axis connecting the first arm 101 and the second arm 102, e.g., the roll-axis of the UAV 100. In some embodiments, because the fourth arm 104 is mounted lower than the third arm 103, the fourth arm 104 may be folded prior to the folding of the third arm 103. In some embodiments, the third arm 103 may be folded prior to the folding of the fourth arm 104. In some embodiments, the third arm 103 and the fourth arm 104 may be folded simultaneously. In the folded state, the third arm 103 and the fourth arm 104 may be disposed one over another at different heights. The third arm 103 and the fourth arm 104 may be disposed in parallel with one another. Both of the third arm 103 and the fourth arm 104 may be disposed substantially in parallel with the axis connecting the first arm 101 and the second arm 102, e.g., the roll-axis of the UAV 1 00.

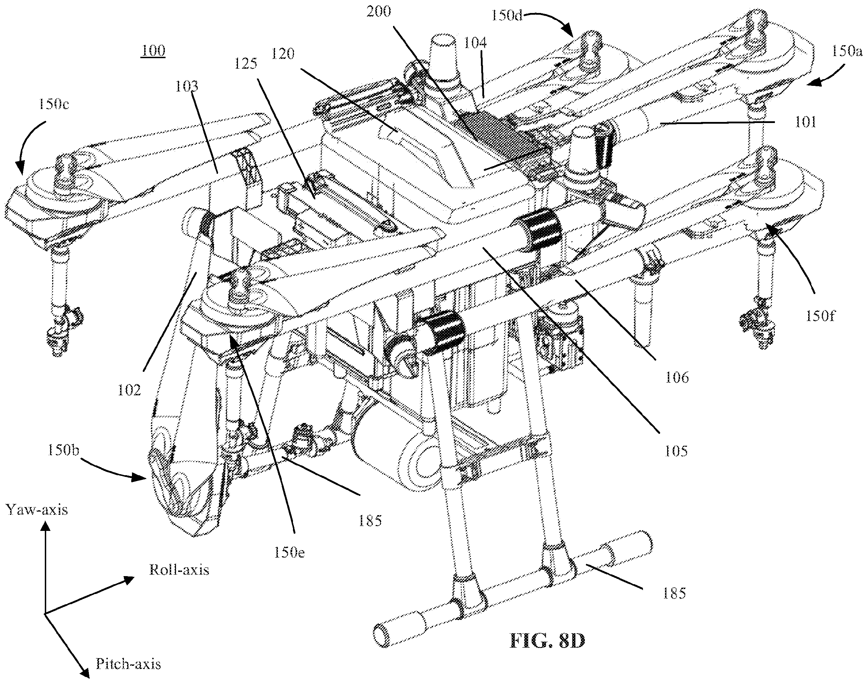

FIG. 8D illustrates a perspective view of the UAV 100 in another partially folded state. As shown in FIG. 8D, the second arm 102 is folded downward from its extended position toward a lower portion of the UAV 100, such as the landing stands 185. The second arm 102 may be rotated counter-clockwise for about 90 degrees. In the folded state, the second arm 102 may extend substantially in parallel with the yaw-axis of the UAV 100. Although not shown in FIG. 8D, the first arm 101 may be folded downward from its extended position toward a lower portion of the UAV 100, such as the landing stands 185. The first arm 101 may be rotated clockwise for about 90 degrees. In the folded state, the first arm 101 may extend substantially in parallel with the yaw-axis of the UAV 1 00.

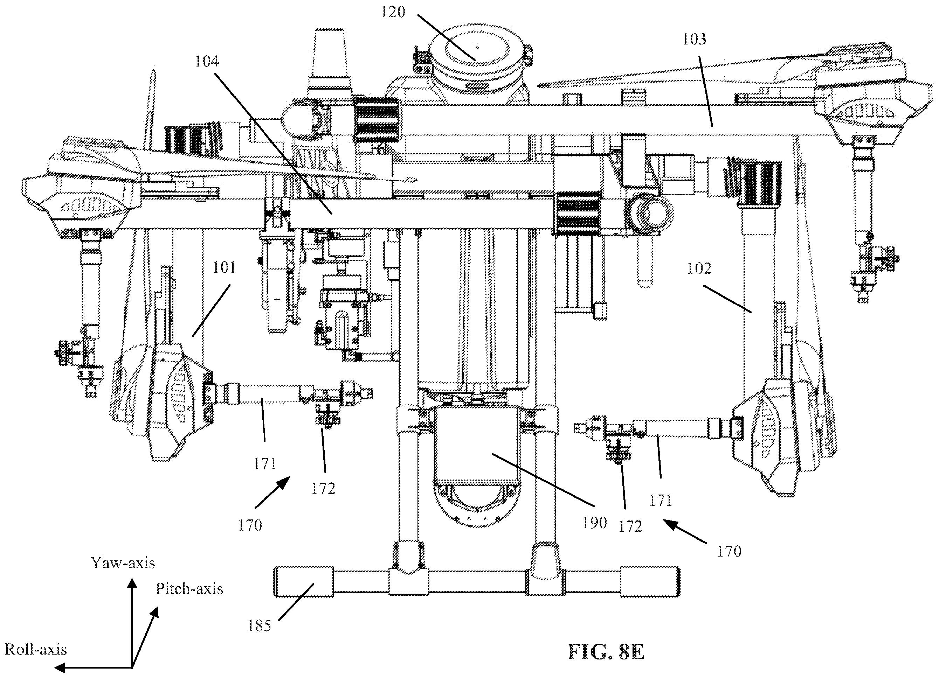

FIG. 8E illustrates a side view of the UAV 100 in a completely folded state with all of the arms folded. As seen in FIG. 8E, the first arm 101 is mounted higher than the second arm 102, and the third arm 103 is mounted higher than the fourth arm 104. In the folded state, the first arm 101 and the second arm 102 extend substantially in parallel with the yaw-axis of the UAV 100. The third arm 103 and the fourth arm 104 are disposed one over another at different heights. The third arm 103 is disposed above the fourth arm 104, and the third arm 103 and the fourth arm 104 are substantially in parallel with each other. Similar configurations apply to the fifth arm 105 and the sixth arm 106 in folded state.

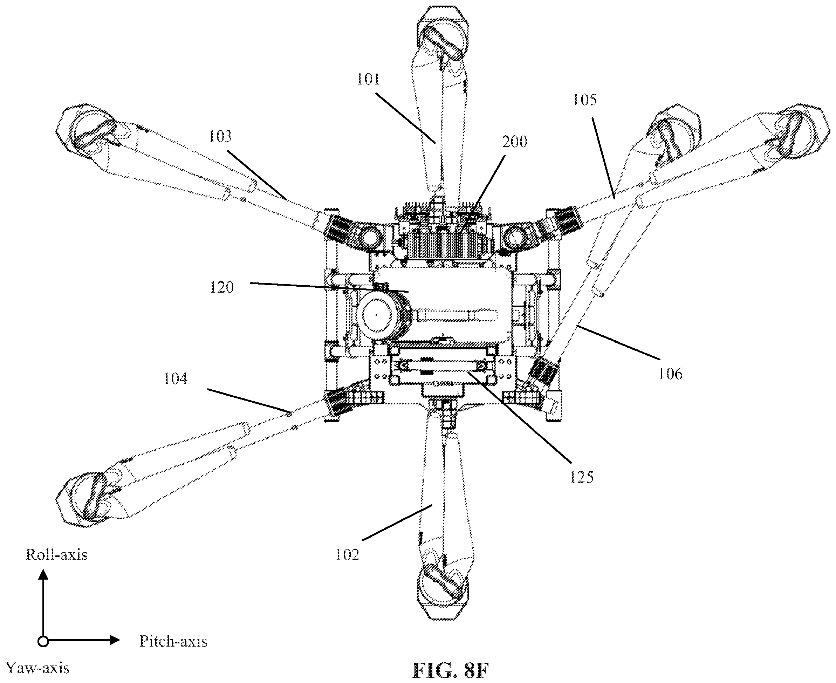

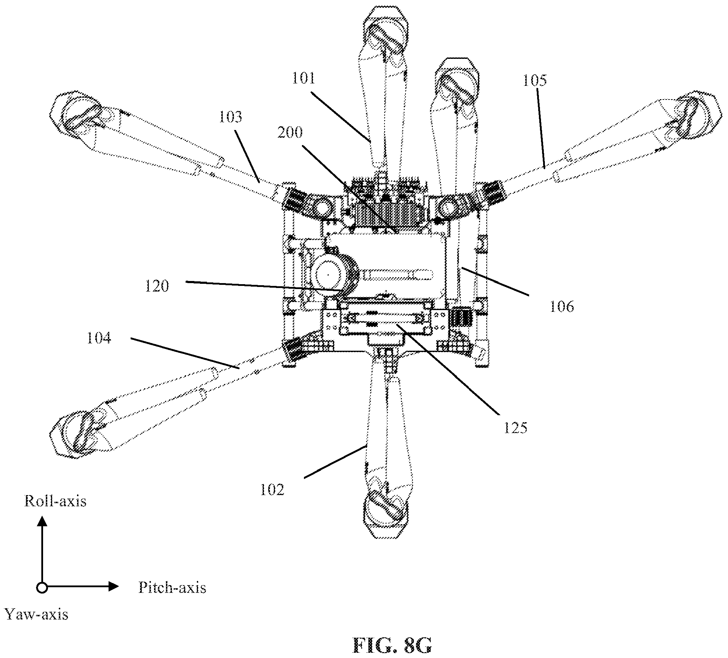

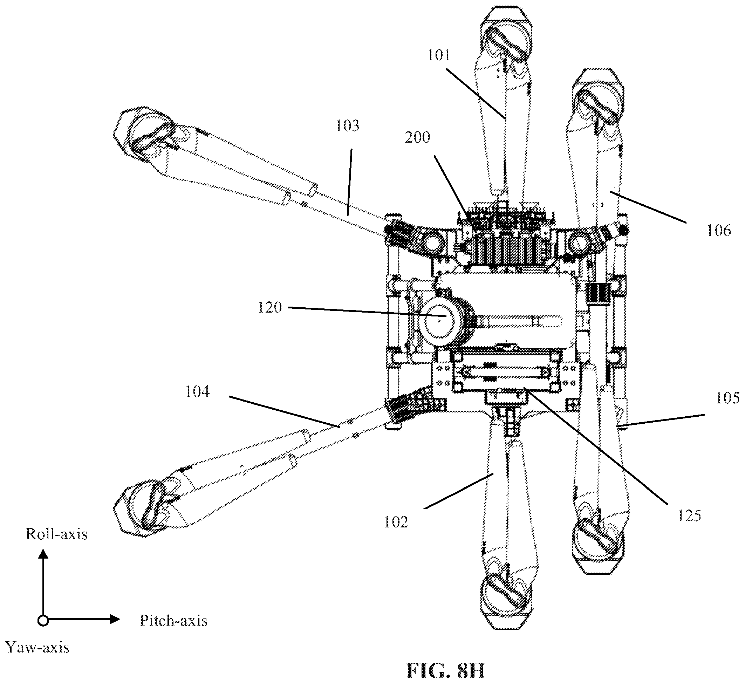

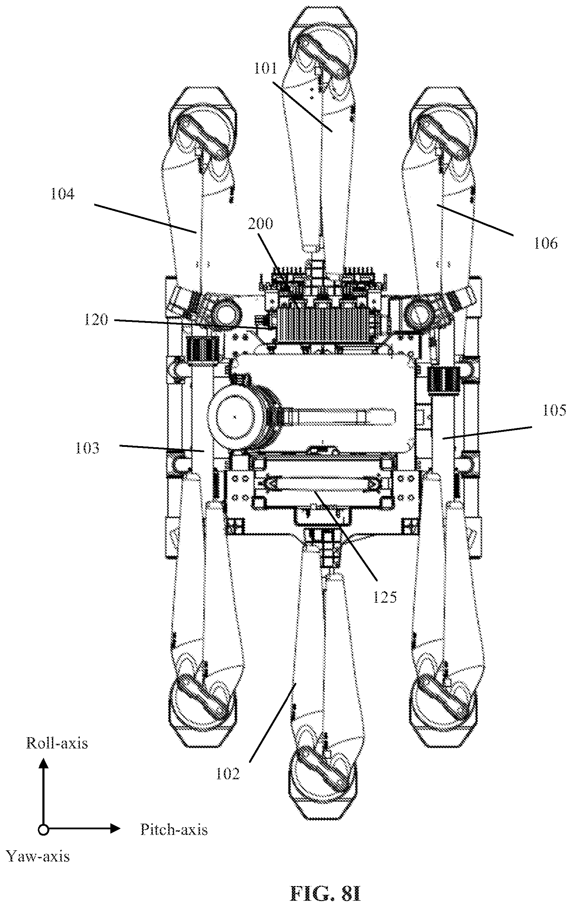

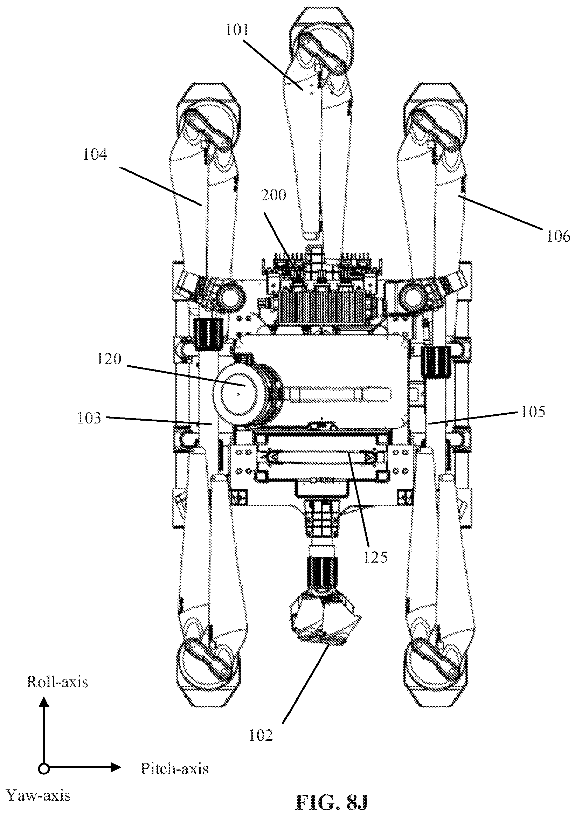

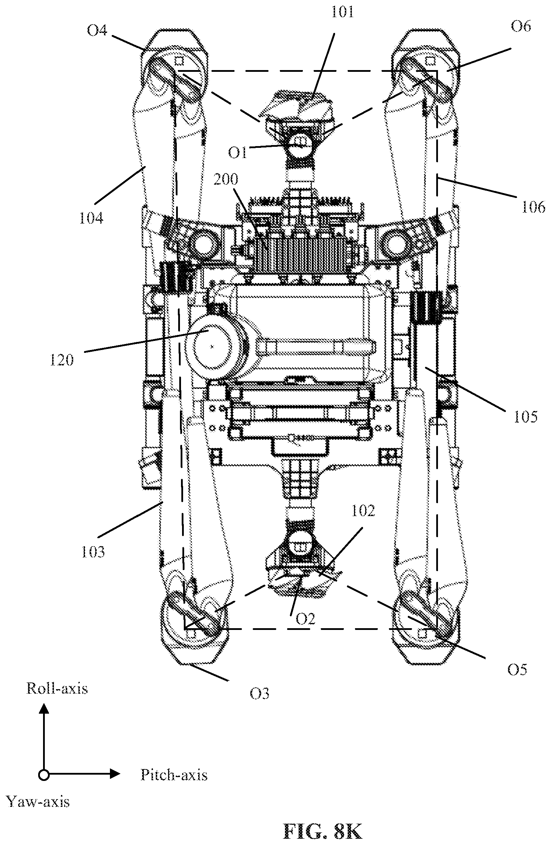

FIG. 8F illustrates a top view of the UAV 100 in a partially folded state. FIG. 8F shows that the sixth arm 106 is partially folded. The other arms 101-105 are in their radially extended positions. FIG. 8G illustrates a top view of the UAV 100 in a partially folded state. FIG. 8G shows that the sixth arm 106 has been completely folded. In the completely folded state, the sixth arm 106 is substantially parallel with the roll-axis of the UAV 100. In the folded state, the sixth arm 106 is also substantially parallel with the first arm 101 or the second arm 102 when the first arm 101 or the second arm 102 is in the extended position. FIG. 8H illustrates a top view of the UAV 100 in a partially folded state. FIG. 8H shows that in addition to the sixth arm 106, the fifth arm 105 has been completely folded. FIG. 8I illustrates a top view of the UAV 100 in a partially folded state. FIG. 8I shows that in addition to the fifth arm 105 and the sixth arm 106, the third arm 103 and the fourth arm 104 have also been completely folded. The first arm 101 and the second arm 102 are still in their extended state. FIG. 8J illustrates a top view of the UAV 100 in a partially folded state. FIG. 8J shows that in addition to the third arm 103, the fourth arm 104, the fifth arm 105, and the sixth arm 106, the second arm 102 has also been completely folded. Only the first arm 101 is in its extended state. FIG. 8K illustrates a top view of the UAV 100 in a completely folded state. FIG. 8K shows that all of the arms 101-106 are completely folded.

FIG. 8K shows that the first arm 101 and the second arm 102 are folded vertically in a downward direction toward the landing stands 185. For example, the first arm 101 and the second arm 102 may be folded downwardly approximately 90° toward the landing stands 185. The third arm 103 and the fourth arm 104 are horizontally folded relative to one another in a horizontal plane. For example, the third arm 103 may be folded in a horizontal plane from the front left side toward the rear side and may be disposed adjacent the central body 10. In the folded state, the third arm 103 may be disposed in parallel with an axis connecting the first arm 101 and the second arm 102, e.g., the roll-axis. The fourth arm 104 may be folded in a horizontal plane from the rear left side toward the front side, and may be disposed adjacent the central body 10. In the folded state, the fourth arm 104 may be disposed in parallel with the axis connecting the first arm 101 and second arm 102, e.g., the roll-axis.

Likewise, the fifth arm 105 and the sixth arm 106 may be horizontally folded relative to one another in opposite directions (e.g., counter-clockwise direction and clockwise direction). In some embodiments, the fifth arm 105 may be folded from the front right side position toward the rear side. In the folded state, the fifth arm 105 may be disposed adjacent the central body 10 and in parallel with the axis connecting the first arm 101 and the second arm 102, e.g., the roll-axis. The sixth arm 106 may be folded from the rear right side toward the front side. In the folded state, the sixth arm 106 may be disposed in parallel with the axis connecting the first arm 101 and the second arm 102, e.g., the roll-axis.

In some embodiments, the third arm 103 may be folded in a direction (e.g., a counter-clockwise direction) for more than 90° to reach the position where the third arm 103 is in parallel with the axis connecting the first arm 101 and the second arm 102, e.g., the roll-axis. The fourth arm 104 may be folded clockwise for more than 90° to reach the position where the fourth arm 104 is in parallel with the axis connecting the first arm 101 and the second arm 102, e.g., the roll-axis. The fifth arm 105 may be folded clockwise for more than 90° to reach the position where the fifth arm 105 is in parallel with the axis connecting the first arm 101 and the second arm 102, e.g., the roll-axis. The sixth arm 106 may be folded counter-clockwise for more than 90° to reach the position where the sixth arm 106 is in parallel with the axis connecting the first arm 101 and the second arm 102, e.g., the roll-axis.

As shown in FIG. 8K, the tip portion of the first arm 101 is represented by O1, the tip portion of the second arm 102 is represented by O2, the tip portion of the third arm 103 is represented by O3, the tip portion of the fourth arm 104 is represented by O4, the tip portion of the fifth arm 105 is represented by O5, and the tip portion of the sixth arm is represented by O6. In the folded state, when the tip portions O3, O4, O5, and O6 of the third arm 103, the fourth arm 104, the fifth arm 105, and the sixth arm 106 are virtually connected, the connection may form a rectangle. In some embodiments, a length direction (e.g., O3-O4 direction) of the rectangle may be substantially parallel to a roll-axis of the UAV 100. In some embodiments, tip portions O1 and O2 of the first arm 101 and the second arm 102, when in the folded state, are located within the rectangle. In some embodiments, in the folded state, the third arm 103, the fourth arm 104, the fifth arm 105, and the sixth arm 106 are substantially parallel with the roll-axis of the UAV 100. The first arm 101 and the second arm 102, when in folded state, are substantially parallel with the yaw-axis of the UAV 100.

A shown in FIG. 8K, in a folded state, when tip portions 01-06 of the first arm 101, the second arm 102, the third arm 103, the fourth arm 104, the fifth arm 105, and the sixth arm 106 are virtually connected, the connection forms a polygon. In the embodiment shown in FIG. 8K, a length of the polygon in a pitch-axis direction may be smaller or shorter than a length of the polygon in a roll-axis direction. A person having ordinary skill in the art could appreciate that in some embodiments, a length of the polygon in a pitch-axis direction may be greater or longer than a length of the polygon in a roll-axis direction.

Because each motor is installed at the tip portion of each arm, the centers of the motors correspond to the tip portions 01-06 of the arms. Thus, in a folded state, when the centers of the third motor, the fourth motor, the fifth motor, and the sixth motor are virtually connected, the connection forms a rectangle, just as the tip portions O3, O4, O5, and O6 of the third arm, the fourth arm, the fifth arm, and the sixth arm are virtually connected. The rectangle is the same as the rectangle formed by O3, O4, O5, and O6. In some embodiments, a length direction of the rectangle is substantially parallel to a roll-axis of the unmanned aerial vehicle. In some embodiments, the first motor (e.g., the motor mounted at tip portion O1) and the second motor (e.g., the motor mounted at tip portion O2) are disposed within the rectangle.

In some embodiments, in a folded state, when the centers of the first motor, the second motor, the third motor, the fourth motor, the fifth motor, and the sixth motor (corresponding to O1, O2, O3, O4, O5, O6) are virtually connected, the connection forms a polygon. In some embodiments, a length of the polygon in a pitch-axis direction is smaller than a length of the polygon in a roll-axis direction.

Because each propeller is mounted to each motor, and each motor is mounted to a tip portion of each arm, the centers of the propellers correspond to the tip portions 01-06 of the arms. Thus, in a folded state, when centers of the third propeller, the fourth propeller, the fifth propeller, and the sixth propeller (corresponding to O3, O4, O5, O6) are virtually connected, the connection forms a rectangle. In some embodiments, a length direction of the rectangle is substantially parallel with a roll-axis of the unmanned aerial vehicle. In some embodiments, a center of the first propeller and a center of the second propeller are located within the rectangle. In some embodiments, a rotation axis of the first propeller and a rotation axis of the second propeller are parallel with a yaw-axis of the unmanned aerial vehicle. In a folded state, when centers of the first propeller, the second propeller, the third propeller, the fourth propeller, the fifth propeller, and the sixth propeller (corresponding to O1, O2, O3, O4, O5, and O6) are virtually connected, the connection forms a polygon. In some embodiments, a length of the polygon in a pitch-axis direction is smaller or shorter than a length of the polygon in a roll-axis direction.

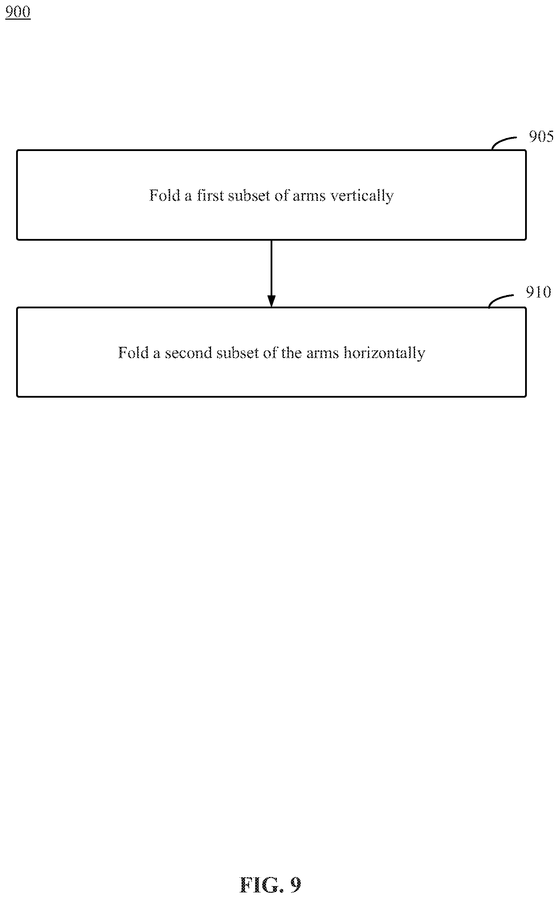

FIG. 9 is a flow chart illustrating a method 900 of folding arms of a UAV according to an example embodiment of the present disclosure. Method 900 may be performed by any operator or user of the UAV 100. Method 900 may include folding a first subset of arms vertically (step 905). The first subset of arms may include the first arm 101 and the second arm 102. The first arm 101 and the second arm 102 may be folded in any sequence. In some embodiments, the first arm 101 and the second arm 102 may each be folded about 90° from a horizontally extended state or position to a vertically extended state or position. In some embodiments, the first arm 101 and the second arm 102 may be vertically folded toward a lower portion of the central body 10 of the UAV 100, such as the landing stands 185. In some embodiments, in the folded state, the first arm 101 and the second arm 102 may each be disposed substantially in parallel with a vertical axis (e.g., the yaw-axis) passing through a center of gravity of the UAV 100.

Method 900 may also include folding a second subset of the arms horizontally (step 910). The second subset may include a third arm 103, a fourth arm 104, a fifth arm 105, and a sixth arm 106. Folding the second subset of arms may include horizontally folding the third arm 103 and the fourth arm 104 respectively coupled to a front left side and a rear left side of the central body 10 in opposite directions (e.g., a counter-clockwise direction and a clockwise direction). Folding the second subset of arms may also include horizontally folding the fifth arm 105 and the sixth arm 106 respectively coupled to a front right side and a rear right side of the central body 10 in opposite directions (e.g., a counter-clockwise direction and a clockwise direction). For example, one of the third arm 103 and the fourth arm 104 that is mounted at a lower arm mounting height on the central body 10 of the UAV 100 may be folded prior to the other arm to avoid interference with the folding of the other arm that has the sprayer 170 mounted thereon. In some embodiments, when the front arms (e.g., third arm 103 and fifth arm 105) are mounted at a higher arm mounting height than the rear arms (e.g., fourth arm 104 and sixth arm 106), the rear arms (e.g., fourth arm 104 and the sixth arm 106) may be folded before the front arms (e.g., third arm 103 and fifth arm 105). For example, the fourth arm 104 may be folded prior to the third arm 103, if the fourth arm 104 is mounted lower than the third arm 103.

In some embodiments, the front arms (e.g., third arm 103 and fifth arm 105) may be folded before the rear arms (e.g., fourth arm 104 and sixth arm 106). In some embodiments, the folding of the front and rear arms may be in any suitable sequence. In some embodiments, folding of a front arm (or a rear arm) may not be initiated until the folding of the other arm (rear arm or front arm) has been completed. For example, the folding of the third arm 103 may not be initiated until the folding of the fourth arm 104 has been completed. The folding of the fifth arm 105 may not be initiated until the folding of the sixth arm 106 has been completed. In some embodiments, folding of a front arm (or a rear arm) and folding of a corresponding rear arm may be performed simultaneously. For example, while the fourth arm 104 is being folded, the third arm 103 may be folded. In the folded state, the third arm 103 may be similarly disposed at a location adjacent the central body 10 of the UAV 100, and may extend in the front-rear direction, e.g., in parallel with the axis connecting the first arm 101 and the second arm 102 (e.g., the roll-axis).

The fifth arm 105 and the sixth arm 106 respectively coupled to a right front side and a right rear side of the central body may be horizontally rotated in opposite directions (e.g., a counter-clockwise direction and a clockwise direction). For example, one of the fifth arm 105 and the sixth arm 106 that is mounted at a lower arm mounting height on the central body 10 of the UAV 100 may be folded prior to the other arm to avoid interference with the folding of the other arm that has the sprayer 170 mounted thereon. For example, when the sixth arm 106 is mounted to the central body 10 of the UAV 100 at an arm mounting height that is lower than the arm mounting height of the fifth arm 105, the sixth arm 106 may be folded before the fifth arm 105. In some embodiments, the folding of the fifth arm 105 may be performed after the sixth arm 106 has been folded to a location adjacent the central body 10, where the sixth arm 106 may extend in the front-rear direction, e.g., in parallel with an axis connecting the first arm 101 and the second arm 102 in the extended states (e.g., the roll-axis). In some embodiments, folding of the fifth arm 105 may be initiated while the sixth arm 106 is being folded. In the folded state, like the sixth arm 106, the fifth arm 105 may be disposed at a location adjacent the central body 10 of the UAV 100, and may extend in the front-rear direction, e.g., in parallel with the axis connecting the first arm 101 and the second arm 102 (e.g., the roll-axis). In some embodiments, the folding of the fifth arm 105 and the sixth arm 106 may be performed simultaneously.

The method 900 may include other steps or processes not shown in FIG. 9. For example, the method 900 may include folding one of the third arm 103 and the fourth arm 104 having a lower arm mounting height through rotating that arm in a first direction, and then folding the other arm that is mounted at a higher arm mounting height through rotating the other arm in a second direction, where the second direction may be opposite the first direction. For example, if the third arm 103 has a higher arm mounting height than the fourth arm 104, the fourth arm 104 may be folded first in a clockwise direction toward the front side of the central body 10. In some embodiments, the fourth arm 104 may be folded for more than 90 degrees toward the front side of the central body 10 to a position where the fourth arm 103 is disposed adjacent the central body 10 and extends in a direction substantially parallel with an axis connecting the first arm 101 and the second arm 102. In some embodiments, the axis may be a roll-axis of the central body 10. After the fourth arm 104 is folded and positioned such that the fourth arm 104 is substantially parallel with a roll-axis of the central body 10, the third arm 103 may be folded in a counter-clockwise direction toward the rear side of the central body 10, until the third arm 103 is positioned such that the third arm 103 is substantially parallel with the roll-axis of the central body 10. In some embodiments, the third arm 103 is folded counter-clockwise for more than 90 degrees to a position where the third arm 103 is disposed adjacent the central body 10 and extends in a direction substantially parallel with the axis connecting the first arm 101 and the second arm 102, e.g., a roll-axis of the central body 10.

In some embodiments, when folding the third arm 103 and the fourth arm 104, the method 900 may include horizontally rotating the third arm 103 and the fourth arm 104 relative to one another in opposite directions. The method 900 may include horizontally rotating the third arm 103 and the fourth arm 104 independently from first positions where the third arm 103 and the fourth arm 104 radially extend from the central body 10 to second positions where the third arm 103 and the fourth arm 104 are disposed adjacent the central body and extend in a direction parallel with an axis connecting the first arm 101 and the second arm 102 (e.g., the roll-axis of the central body 10). In the folded state, at the second positions where the third arm 103 and the fourth arm 104 may be disposed adjacent the central body 10, the third arm 103 and the fourth arm 104 may extend substantially in parallel with one another and may be disposed one over another at different heights.

In some embodiments, the fifth arm 105 and sixth fourth arm 106 may be mounted to the central body 10 of the unmanned aerial vehicle at different heights relative to the landing stands 185. The method 1200 may include folding one of the fifth arm 105 and the sixth arm 106 having a lower arm mounting height by rotating that arm in a first direction and folding the other arm having a higher arm mounting height by rotating the other arm in a second direction opposite the first direction. For example, the sixth arm 106 may have a lower arm mounting height than the fifth arm 105. The sixth arm 106 may be folded prior to the fifth arm 105. For example, the sixth arm 106 may be rotated in a first direction (e.g., counter-clockwise direction) for more than 90 degrees until the sixth arm 106 is positioned such that the sixth arm 106 is substantially in parallel with an axis connecting the first arm 101 and the second arm 102, e.g., the roll-axis of the central body 10. After the sixth arm 106 is folded, the fifth arm 105 may be rotated in a second direction (e.g., clockwise direction) for more than 90 degrees until the fifth arm 105 is positioned such that the fifth arm 105 is substantially in parallel with the axis connecting the first arm 101 and the second arm 102, e.g., the roll-axis of the central body 10.

When folding the fifth arm 105 and the sixth arm 106, the method may include horizontally rotating the fifth arm 105 and the sixth arm 106 relative to one another in opposite directions. The method 900 may include horizontally rotating the fifth arm 105 and the sixth arm 106 independently from first positions where the fifth arm 105 and the sixth arm 106 radially extend from the central body 10 to second positions where the fifth arm 105 and the sixth arm 106 are disposed adjacent the central body 10 and extend in a direction substantially parallel with an axis connecting the first arm 101 and the second arm 102, e.g., the roll-axis of the central body 10. In the folded state, at the second positions where the fifth arm 105 and the sixth arm 106 may be disposed adjacent the central body 10, the fifth arm 105 and the sixth arm 106 extend substantially parallel with one another and are disposed one over another at different heights.

FIG. 11 is a perspective view of a UAV 1100 with a power supply 125 detached from the central body 1110 of the UAV 1100, and a fluid tank 120 attached to the central body 1100. The UAV 1100 is slightly different from the UAV 100. For example, in UAV 100, each arm may be mounted with a single spray nozzle. In UAV 1100, each arm may be mounted with two spray nozzles. The UAV 1100 is used for illustrating the mounting structures for mounting the power supply 125 and the fluid tank 120 to the central body. Similar mounting structures provided on UAV 1100 may be provided on UAV 100.

FIG. 11 shows that the fluid tank 120 and the power supply 125 may be inserted into a holding portion at the center portion of the central body 1110 from a top portion of the central body 1110. FIG. 11 shows that the fluid tank 120 is mounted in the central body 1110, and the power supply 125 is detached from the central body 1110. Both of the fluid tank 120 and the power supply 125 may be easily attached to the central body 1110 and detached from the central body 1110. In the illustrated embodiment, the holding portion is a hollow portion or space defined in a middle portion of the central body 1110. An opening is provided at the top of the hollow portion to receive the fluid tank 120 and the power supply 125. In some embodiments, the opening is defined by an upper surface of the central body 1110. The fluid tank 120 and the power supply 125 may be inserted into the hollow portion via the opening.

The quick-release mechanism for mounting the fluid tank 120 and the power supply 125 may include position limiting members provided on both the outer walls of the fluid tank 120 and the power supply 125, and corresponding engaging members provided on the central body 1110. For example, the fluid tank 120 and the power supply 125 may each include at least one position limiting member (e.g., two or more position limiting members) provided on at least one outer wall (e.g., two or more outer walls). Corresponding engaging members may be provided on the central body 1110, such as on at least one (e.g., two or more) sidewalls of the hollow potion, or on two or more sidewalls adjacent the opening. The engaging members provided on the central body 1110 may be configured to engage with the position limiting members provided on the fluid tank 120 and the power supply 125, such that the fluid tank 120 and the power supply 125 are held within the hollow portion.

In some embodiments, the engaging members provided on the central body 1110 may include protrusions and the position limiting members provided on the fluid tank 120 and the power supply 125 may include depressions (or position limiting grooves) provided on two or more outer walls of the fluid tank 120 and an outer wall of the power supply 125. The protrusions may be engaged with the position limiting grooves to limit the positions of the fluid tank 120 and the power supply 125. In some embodiments, the position limiting grooves provided on the fluid tank 120 and the power supply 125 may include latching grooves, and the engaging members provided on the central body 1110 may include hooks configured to engage with the latching grooves.

FIG. 11 shows an example of the position limiting member provided on the power supply 125. In this embodiment, the position limiting member may include at least two position limiting grooves 1251 provided on two sides of the power supply 125 (e.g., the side shown in FIG. 11 and the opposite side that is not shown in FIG. 11). The engaging member provided on the central body 1110 may include at least two protrusions 1260 provided on two opposite side walls and configured to engage with the position limiting grooves 1251 provided on the sides of the power supply 125 for holding the power supply 125 within the hollow portion of the central body 1110. When the power supply 125 is to be detached from the central body 1110, a user may pull out the power supply 125, and the protrusions 1260 provided on the sides walls of the central body 1110 do not prevent the power supply 125 from being removed. FIG. 11 also shows that the fluid tank 120 may include a first position limiting groove 1261 on a first outer wall of the fluid tank 120. The first position limiting groove 1261 may be engaged with an engaging member provided on the central body 1110, such as a protrusion provided on a side surface of the central body 1110.

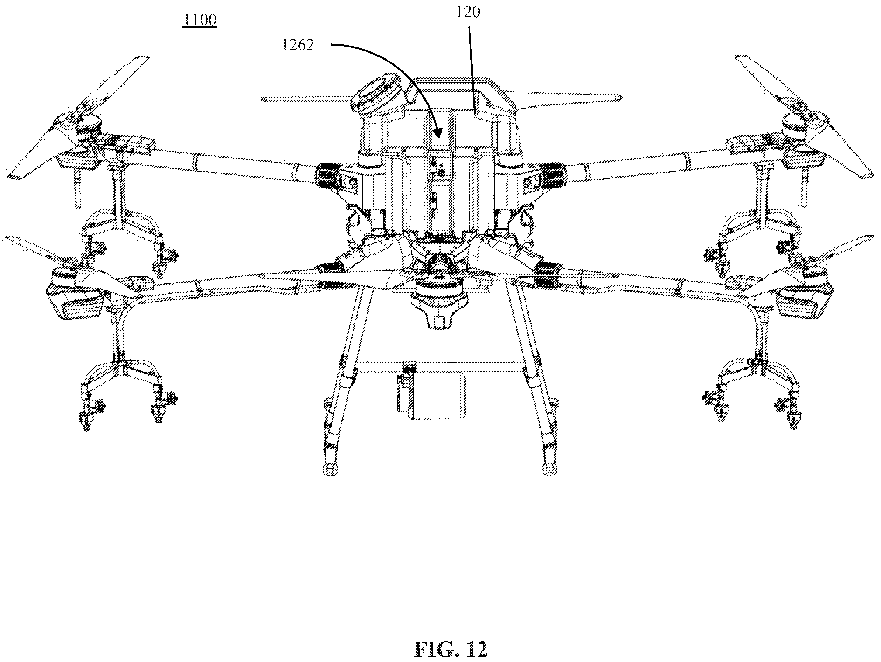

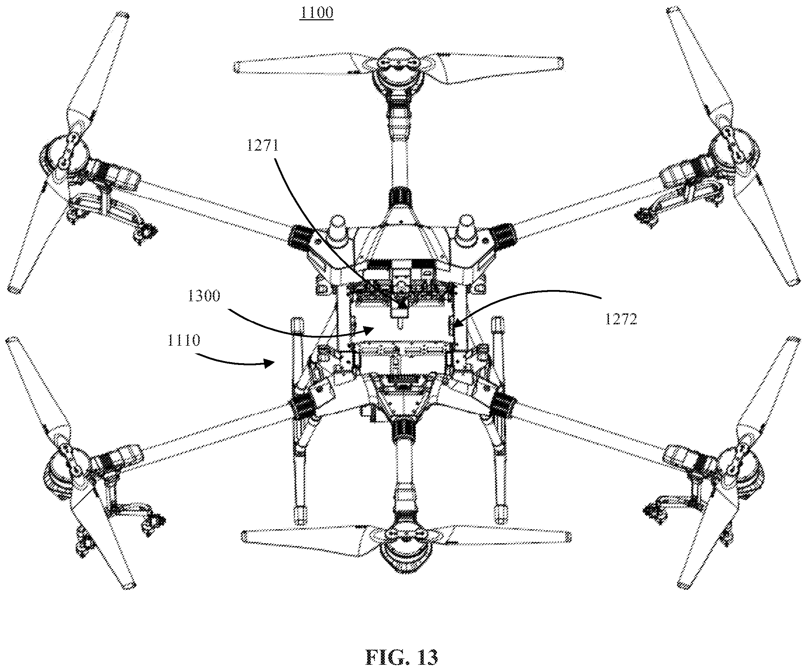

FIG. 12 shows the UAV 1100 with the fluid tank 120 at least partially removed from the central body 1110 to illustrate a second position limiting groove 1262 provided on a second outer wall of the fluid tank 120. FIG. 13 shows the UAV 1100 with the fluid tank 120 and the power supply 125 removed to expose a hollow portion 1300 defined by the central body 1110 for holding the fluid tank 120 and the power supply 125. FIG. 13 also shows a first protrusion 1271 provided on a side wall of the central body 1110 for engaging with the first position limiting groove 1261, and a second protrusion 1272 provided on another side wall of the central body 1110 for engaging with the second position limiting groove 1262. Through the engagement between the first position limiting groove 1261 and the first protrusion 1271 and the engagement between the second position limiting groove 1262 and the second protrusion 1272, the fluid tank 120 may be held within the hollow portion 1300. When the fluid tank 120 is to be removed or detached from the central body 1110, a user may pull out the fluid tank 120, and the first protrusion 1271 and the second protrusion 1272 do not prevent the fluid tank 120 from being detached from the central body 1110.

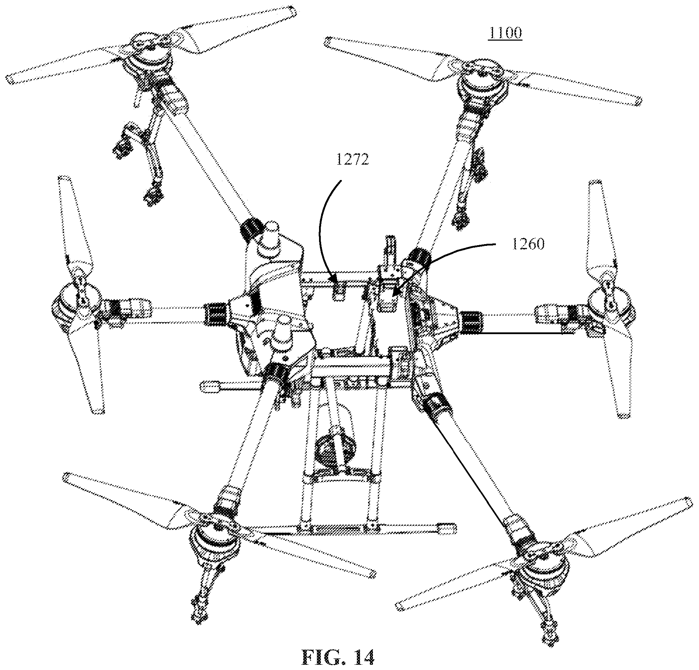

FIG. 14 shows the UAV 1100 with the fluid tank 120 and the power supply 125 removed. FIG. 14 shows the second protrusion 1272 for holding the fluid tank 120 and the protrusion 1260 for holding the power supply 125. In some embodiments, the central body 1110 of the UAV 1100 may be configured such that when the fluid tank 120 and the power supply 125 are attached to the central body 1110 or when the fluid tank 120 and the power supply 125 are detached from the central body 1110, the center of gravity of the UAV 1100 does not change at least in the horizontal direction. For example, the center of gravity may remain on a same vertical axis of the UAV 11 00.

While embodiments of the present disclosure have been shown and described herein, it will be obvious to those skilled in the art that such embodiments are provided by way of example only. Numerous variations, changes, and substitutions will now occur to those skilled in the art without departing from the present disclosure. It should be understood that various alternatives to the embodiments of the invention described herein may be employed in practicing the present disclosure. It is intended that the following claims define the scope of the invention and that methods and structures within the scope of these claims be covered thereby.

## Claims

1. A method (900, 1200) of folding an unmanned aerial vehicle including a plurality of arms (101-106) radially extending from a central body (10, 10i, 1005, 1100, 1110) of the unmanned aerial vehicle, wherein each arm supports one or more propulsion assemblies that provide a propulsion force while the unmanned aerial vehicle is in flight, the method (900, 1200) comprising:
folding a first subset of the arms (101-106) vertically, wherein the first subset of the arms (101-106) comprises a first arm (101) and a second arm (102); and
folding a second subset of the arms (101-106) horizontally;
**characterized in that**
folding the first subset of the arms (101-106) vertically comprises vertically folding the first arm (101) and the second arm (102) respectively coupled to a front side and a rear side of the central body (10, 10i, 1005, 1100, 1110) from extending radially from the central body (10, 10i, 1005, 1100, 1110) toward a lower portion of the central body (10, 10i, 1005, 1100, 1110) to extend in vertical direction.

2. The method (900, 1200) of claim 1, wherein the second subset of the claims comprises a third arm (103), a fourth arm (103, 104, 106), a fifth arm (105), and a sixth arm (106), and wherein folding the second subset of the arms (101-106) horizontally comprises:
horizontally folding the third arm (103) and the fourth arm (103, 104, 106) respectively coupled to a front left side and a rear left side of the central body (10, 10i, 1005, 1100, 1110); and
horizontally folding the fifth arm (105) and the sixth arm (106) respectively coupled to a front right side and a rear right side of the central body (10, 10i, 1005, 1100, 1110).

3. The method (900, 1200) of claim 2, wherein the third arm (103) and the fourth arm (103, 104, 106) are coupled to the central body (10, 10i, 1005, 1100, 1110) at different arm mounting heights, and wherein horizontally folding the third arm (103) and the fourth arm (103, 104, 106) comprises:
folding one of the third arm (103) and the fourth arm (103, 104, 106) having a lower arm mounting height by horizontally rotating in a first direction; and
folding the other one of the third arm (103) and the fourth arm (103, 104, 106) having a higher arm mounting height by horizontally rotating in a second direction opposite the first direction.

4. The method (900, 1200) of claim 3, wherein the first direction is one of a clockwise direction or a counter-clockwise direction, and the second direction is the other one of the clockwise direction or the counter-clockwise direction.

5. The method (900, 1200) of claim 3, wherein the one of the third arm (103) and the fourth arm (103, 104, 106) having the lower arm mounting height is horizontally folded prior to the other one of the third arm (103) and the fourth arm (103, 104, 106) having the higher arm mounting height.

6. The method (900, 1200) of claim 3, wherein horizontally folding the third arm (103) coupled to the front left side of the central body (10, 10i, 1005, 1100, 1110) comprises horizontally rotating the third arm (103) for more than 90 degrees to a position where the third arm (103) is disposed adjacent the central body (10, 10i, 1005, 1100, 1110) and horizontally extends in a direction substantially parallel with an axis connecting the first arm (101) and the second arm (102), preferably
wherein horizontally folding the fourth arm (103, 104, 106) coupled to the rear left side of the central body (10, 10i, 1005, 1100, 1110) of the unmanned aerial vehicle comprises horizontally rotating the fourth arm (103, 104, 106) for more than 90 degrees to a position where the fourth arm (103, 104, 106) is disposed adjacent the central body (10, 10i, 1005, 1100, 1110) and horizontally extends in a direction substantially parallel with the axis connecting the first arm (101) and the second arm (102).

7. The method (900, 1200) of claim 2, wherein the fifth arm (105) and sixth arm (106) are coupled to the central body (10, 10i, 1005, 1100, 1110) of the unmanned aerial vehicle at different arm mounting heights, and wherein horizontally folding the fifth arm (105) and the sixth arm (106) comprises:
folding one of the fifth arm (105) and the sixth arm (106) having a lower arm mounting height by horizontally rotating in a first direction; and
folding the other one of the fifth arm (105) and the sixth arm (106) having a higher arm mounting height by horizontally rotating in a second direction opposite the first direction.

8. The method (900, 1200) of claim 7, wherein the first direction is one of a clockwise direction or a counter-clockwise direction, and the second direction is the other one of the clockwise direction or the counter-clockwise direction.

9. The method (900, 1200) of claim 7, wherein the one of the fifth arm (105) and the sixth arm (106) having the lower arm mounting height is horizontally folded prior to the other one of the fifth arm (105) and the sixth arm (106) having the higher arm mounting height.

10. The method (900, 1200) of claim 7, wherein horizontally folding the fifth arm (105) coupled to the front right side of the central body (10, 10i, 1005, 1100, 1110) comprises horizontally rotating the fifth arm (105) for more than 90 degrees to a position where the fifth arm (105) is disposed adjacent the central body (10, 10i, 1005, 1100, 1110) and horizontally extends in a direction substantially parallel with an axis connecting the first arm (101) and the second arm (102), preferably
wherein horizontally folding the sixth arm (106) coupled to the rear right side of the central body (10, 10i, 1005, 1100, 1110) comprises horizontally rotating the sixth arm (106) for more than 90 degrees to a position where the sixth arm (106) is disposed adjacent the central body (10, 10i, 1005, 1100, 1110) and horizontally extends in a direction substantially parallel with the axis connecting the first arm (101) and the second arm (102).

11. The method (900, 1200) of claim 2, wherein horizontally folding the third arm (103) and the fourth arm (103, 104, 106) comprises independently folding the third arm (103) and the fourth arm (103, 104, 106) from first positions where the third arm (103) and the fourth arm (103, 104, 106) radially extend from the central body (10, 10i, 1005, 1100, 1110) to second positions where the third arm (103) and the fourth arm (103, 104, 106) are disposed adjacent the central body (10, 10i, 1005, 1100, 1110) and horizontally extend in a direction parallel with an axis connecting the first arm (101) and the second arm (102).

12. The method (900, 1200) of claim 11, wherein at the second positions where the third arm (103) and the fourth arm (103, 104, 106) are disposed adjacent the central body (10, 10i, 1005, 1100, 1110), the third arm (103) and the fourth arm (103, 104, 106) horizontally extend substantially parallel with one another and are disposed one over another at different heights.

13. The method (900, 1200) of claim 2, wherein horizontally folding the fifth arm (105) and the sixth arm (106) comprises independently folding the fifth arm (105) and the sixth arm (106) from first positions where the fifth arm (105) and the sixth arm (106) radially extend from the central body (10, 10i, 1005, 1100, 1110) to second positions where the fifth arm (105) and the sixth arm (106) are disposed adjacent the central body (10, 10i, 1005, 1100, 1110) and horizontally extend in a direction substantially parallel with an axis connecting the first arm (101) and the second arm (102), preferably
wherein at the second positions where the fifth arm (105) and the sixth arm (106) are disposed adjacent the central body (10, 10i, 1005, 1100, 1110), the fifth arm (105) and the sixth arm (106) horizontally extend substantially parallel with one another and are disposed one over another at different heights.

14. An unmanned aerial vehicle, comprising:
a central body (10, 10i, 1005, 1100, 1110); and
a plurality of arms (101-106) extendable from the central body (10, 10i, 1005, 1100, 1110),
wherein each arm supports one or more propulsion assemblies that provide a propulsion force while the unmanned aerial vehicle is in flight, wherein a first subset of the arms (101-106) are foldable vertically, wherein the first subset of the arms (101-106) comprises a first arm (101) and a second arm (102), and a second subset of the arms (101-106) are foldable horizontally;
**characterized in that**
folding the first subset of the arms (101-106) vertically comprises vertically folding the first arm (101) and the second arm (102) respectively coupled to a front side and a rear side of the central body (10, 10i, 1005, 1100, 1110) from extending radially from the central body (10, 10i, 1005, 1100, 1110) toward a lower portion of the central body (10, 10i, 1005, 1100, 1110) to extend in vertical direction.

## Patentansprüche

1. Verfahren (900, 1200) zum Falten eines unbemannten Luftfahrzeugs, das eine Vielzahl von Armen (101-106) aufweist, die sich radial von einem zentralen Körper (10, 10i, 1005, 1100, 1110) des unbemannten Luftfahrzeugs erstrecken, wobei jeder Arm eine oder mehrere Antriebsbaugruppen stützt, die eine Antriebskraft bereitstellen, während sich das unbemannte Luftfahrzeug im Flug befindet, wobei das Verfahren (900, 1200) Folgendes umfasst:
vertikales Falten einer ersten Untergruppe der Arme (101-106), wobei die erste Untergruppe der Arme (101-106) einen ersten Arm (101) und einen zweiten Arm (102) umfasst; und
horizontales Falten einer zweiten Untergruppe der Arme (101-106) ;
**dadurch gekennzeichnet, dass**
das vertikale Falten der ersten Untergruppe der Arme (101-106) das vertikale Falten des ersten Arms (101) und des zweiten Arms (102), die jeweils mit einer Vorderseite und
einer Hinterseite des zentralen Körpers (10, 10i, 1005, 1100, 1110) gekoppelt sind, von einem radialen Erstrecken von dem zentralen Körper (10, 10i, 1005, 1100, 1110) zu einem unteren Abschnitt des zentralen Körpers (10, 10i, 1005, 1100, 1110) zu einem Erstrecken in der vertikalen Richtung umfasst.

2. Verfahren (900, 1200) nach Anspruch 1, wobei die zweite Untergruppe der Ansprüche einen dritten Arm (103), einen vierten Arm (103, 104, 106), einen fünften Arm (105) und einen sechsten Arm (106) umfasst, und wobei das horizontale Falten der zweiten Untergruppe der Arme (101-106) Folgendes umfasst: horizontales Falten des dritten Arms (103) und des vierten Arms (103, 104, 106), die jeweils mit einer vorderen linken Seite und einer hinteren linken Seite des zentralen Körpers (10, 10i, 1005, 1100, 1110) gekoppelt sind; und horizontales Falten des fünften Arms (105) und des sechsten Arms (106), die jeweils mit einer vorderen rechten Seite und einer hinteren rechten Seite des zentralen Körpers (10, 10i, 1005, 1100, 1110) gekoppelt sind.

3. Verfahren (900, 1200) nach Anspruch 2, wobei der dritte Arm (103) und der vierte Arm (103, 104, 106) in unterschiedlichen Armmontagehöhen mit dem zentralen Körper (10, 10i, 1005, 1100, 1110) gekoppelt sind, und wobei das horizontale Falten des dritten Arms (103) und des vierten Arms (103, 104, 106) Folgendes umfasst:
Falten eines des dritten Arms (103) und des vierten Arms (103, 104, 106), der eine niedrigere Armmontagehöhe aufweist, durch horizontales Drehen in einer ersten Richtung; und
Falten des anderen des dritten Arms (103) und des vierten Arms (103, 104, 106), der eine höhere Armmontagehöhe aufweist, durch horizontales Drehen in einer zweiten Richtung entgegengesetzt zu der ersten Richtung.

4. Verfahren (900, 1200) nach Anspruch 3, wobei die erste Richtung eine einer Richtung im Uhrzeigersinn oder einer Richtung entgegen dem Uhrzeigersinn ist und die zweite Richtung die andere der Richtung im Uhrzeigersinn oder der Richtung entgegen dem Uhrzeigersinn ist.

5. Verfahren (900, 1200) nach Anspruch 3, wobei der eine des dritten Arms (103) und des vierten Arms (103, 104, 106), der die niedrigere Armmontagehöhe aufweist, vor dem anderen des dritten Arms (103) Und des vierten Arms (103, 104, 106), der die höhere Armmontagehöhe aufweist, horizontal gefaltet wird.

6. Verfahren (900, 1200) nach Anspruch 3, wobei das horizontale Falten des dritten Arms (103), der mit der vorderen linken Seite des zentralen Körpers (10, 10i, 1005, 1100, 1110) gekoppelt ist, das horizontale Drehen des dritten Arms (103) um mehr als 90 Grad in eine Position, wo der dritte Arm (103) benachbart zu dem zentralen Körper (10, 10i, 1005, 1100, 1100) angeordnet ist und sich horizontal in einer Richtung erstreckt, die im Wesentlichen parallel zu einer Achse ist, die den ersten Arm (101) und den zweiten Arm (102) verbindet, umfasst,
wobei vorzugsweise das horizontale Falten des vierten Arms (103, 104, 106), der mit der hinteren linken Seite des zentralen Körpers (10, 10i, 1005, 1100, 1110) des unbemannten Luftfahrzeugs gekoppelt ist, das horizontale Drehen des vierten Arms (103, 104, 106) um mehr als 90 Grad in eine Position, wo der vierte Arm (103, 104, 106) benachbart zu dem zentralen Körper (10, 10i, 1005, 1100, 1110) angeordnet ist und sich horizontal in einer Richtung erstreckt, die im Wesentlichen parallel zu der Achse ist, die den ersten Arm (101) und den zweiten Arm (102) verbindet, umfasst.

7. Verfahren (900, 1200) nach Anspruch 2, wobei der fünfte Arm (105) und der sechste Arm (106) mit dem zentralen Körper (10, 10i, 1005, 1100, 1110) des unbemannten Luftfahrzeugs in unterschiedlichen Armmontagehöhen gekoppelt sind, und wobei das horizontale Falten des fünften Arms (105) und des sechsten Arms (106) Folgendes umfasst:
Falten eines des fünften Arms (105) und des sechsten Arms (106), der eine niedrigere Armmontagehöhe aufweist, durch horizontales Drehen in einer ersten Richtung; und
Falten des anderen des fünften Arms (105) und des sechsten Arms (106), der eine höhere Armmontagehöhe aufweist, durch horizontales Drehen in einer zweiten Richtung entgegengesetzt zu der ersten Richtung.

8. Verfahren (900, 1200) nach Anspruch 7, wobei die erste Richtung eine einer Richtung im Uhrzeigersinn oder einer Richtung entgegen dem Uhrzeigersinn ist und die zweite Richtung die andere der Richtung im Uhrzeigersinn oder der Richtung entgegen dem Uhrzeigersinn ist.

9. Verfahren (900, 1200) nach Anspruch 7, wobei der eine des fünften Arms (105) und des sechsten Arms (106), der die niedrigere Armmontagehöhe aufweist, vor dem anderen des fünften Arms (105) und des sechsten Arms (106), der die höhere Armmontagehöhe aufweist, horizontal gefaltet wird.

10. Verfahren (900, 1200) nach Anspruch 7, wobei das horizontale Falten des fünften Arms (105), der mit der vorderen rechten Seite des zentralen Körpers (10, 10i, 1005, 1100, 1110) gekoppelt ist, das horizontale Drehen des fünften Arms (105) um mehr als 90 Grad in eine Position, wo der fünfte Arm (105) benachbart zu dem zentralen Körper (10, 10i, 1005, 1100, 1110) angeordnet ist und sich horizontal in einer Richtung erstreckt, die im Wesentlichen parallel zu einer Achse ist, die den ersten Arm (101) und den zweiten Arm (102) verbindet, umfasst,
wobei vorzugsweise das Falten des sechsten Arms (106), der mit der hinteren rechten Seite des zentralen Körpers (10, 10i, 1005, 1100, 1110) gekoppelt ist, das horizontale Drehen des sechsten Arms (106) um mehr als 90 Grad in eine Position, wo der sechste Arm (106) benachbart zu dem zentralen Körper (10, 10i, 1005, 1100, 1110) angeordnet ist und sich horizontal in einer Richtung erstreckt, die im Wesentlichen parallel zu der Achse ist, die den ersten Arm (101) und den zweiten Arm (102) verbindet, umfasst.

11. Verfahren (900, 1200) nach Anspruch 2, wobei das horizontale Falten des dritten Arms (103) und des vierten Arms (103, 104, 106) das unabhängige Falten des dritten Arms (103) und des vierten Arms (103, 104, 106) von ersten Positionen, wo sich der dritte Arm (103) und der vierte Arm (103, 104, 106) radial von dem zentralen Körper (10, 10i, 1005, 1100, 1110) erstrecken, in zweite Positionen, wo der dritte Arm (103) und der vierte Arm (103, 104, 106) benachbart zu dem zentralen Körper (10, 10i, 1005, 1100, 1110) angeordnet sind und sich horizontal in einer Richtung erstrecken, die parallel zu einer Achse ist, die den ersten Arm (101) und den zweiten Arm (102) verbindet, umfasst.

12. Verfahren (900, 1200) nach Anspruch 11, wobei in den zweiten Positionen, wo der dritte Arm (103) und der vierte Arm (103, 104, 106) benachbart zu dem zentralen Körper (10, 10i, 1005, 1100, 1110) angeordnet sind, sich der dritte Arm (103) und der vierte Arm (103, 104, 106) im Wesentlichen parallel zueinander horizontal erstrecken und in unterschiedlichen Höhen übereinander angeordnet sind.

13. Verfahren (900, 1200) nach Anspruch 2, wobei das horizontale Falten des fünften Arms (105) und des sechsten Arms (106) das unabhängige Falten des fünften Arms (105) und des sechsten Arms (106) von ersten Positionen, wo sich der fünfte Arm (105) und der sechste Arm (106) radial von dem zentralen Körper (10, 10i, 1005, 1100, 1110) erstrecken, in zweite Positionen, wo der fünfte Arm (105) und der sechste Arm (106) benachbart zu dem zentralen Körper (10, 10i, 1005, 1100, 1110) angeordnet sind und sich horizontal in einer Richtung erstrecken, die parallel zu einer Achse ist, die den ersten Arm (101) und den zweiten Arm (102) verbindet, umfasst,
wobei vorzugsweise in den zweiten Positionen, wo der fünfte Arm (105) und der sechste Arm (106) benachbart zu dem zentralen Körper (10, 10i, 1005, 1100, 1110) angeordnet sind, sich der fünfte Arm (105) und der sechste Arm (106) im Wesentlichen parallel zueinander horizontal erstrecken und in unterschiedlichen Höhen übereinander angeordnet sind.

14. Unbemanntes Luftfahrzeug, umfassend:
einen zentralen Körper (10, 10i, 1005, 1100, 1110); und
eine Vielzahl von Armen (101-106), die sich von dem zentralen Körper (10, 10i, 1005, 1100, 1110) erstrecken können, wobei jeder Arm eine oder mehrere Antriebsbaugruppen stützt, die eine Antriebskraft bereitstellen, während sich das unbemannte Luftfahrzeug im Flug befindet, wobei eine erste Untergruppe der Arme (101-106) vertikal gefaltet werden kann, wobei die erste Untergruppe der Arme (101-106) einen ersten Arm (101) und einen zweiten Arm (102) umfasst, und wobei eine zweite Untergruppe der Arme (101-106) horizontal gefaltet werden kann;
**dadurch gekennzeichnet, dass**
das vertikale Falten der ersten Untergruppe der Arme (101-106) das vertikale Falten des ersten Arms (101) und des zweiten Arms (102), die jeweils mit einer vorderen Seite und einer hinteren Seite des zentralen Körpers (10, 10i, 1005, 1100, 1110) gekoppelt sind, von einem radialen Erstrecken von dem zentralen Körper (10, 10i, 1005, 1100, 1110) zu einem unteren Abschnitt des zentralen Körpers (10, 10i, 1005, 1100, 1110) zu einem Erstrecken in der vertikalen Richtung umfasst.

## Revendications

1. Procédé (900, 1200) pour plier un véhicule aérien sans pilote comprenant une pluralité de bras (101-106) s'étendant radialement à partir d'un corps central (10, 10i, 1005, 1100, 1110) du véhicule aérien sans pilote, dans lequel chaque bras supporte un ou plusieurs ensembles de propulsion qui fournissent une force de propulsion alors que le véhicule aérien sans pilote est en vol, le procédé (900, 1200) comprenant les étapes consistant à :
plier un premier sous-ensemble de bras (101-106) verticalement, dans lequel le premier sous-ensemble de bras (101-106) comprend un premier bras (101) et un second bras (102) ; et
plier un second sous-ensemble de bras (101-106) horizontalement ;
**caractérisé en ce que** :
l'étape consistant à plier le premier sous-ensemble de bras (101-106) verticalement comprend l'étape consistant à plier verticalement le premier bras (101) et le deuxième bras (102) respectivement couplés à un côté avant et un côté arrière du corps central (10, 10i, 1005, 1100, 1110) s'étendant radialement à partir du corps central (10, 10i, 1005, 1100, 1110) vers une partie inférieure du corps central (10, 10i, 1005, 1100, 1110) pour s'étendre dans la direction verticale.

2. Procédé (900, 1200) selon la revendication 1, dans lequel le second sous-ensemble des revendications comprend un troisième bras (103), un quatrième bras (103, 104, 106), un cinquième bras (105) et un sixième bras (106), et dans lequel l'étape consistant à plier le second sous-ensemble de bras (101-106) horizontalement comprend les étapes consistant à :
plier horizontalement le troisième bras (103) et le quatrième bras (103, 104, 106) respectivement couplés à un côté gauche avant et un côté gauche arrière du corps central (10, 10i, 1005, 1100, 1110) ; et
plier horizontalement le cinquième bras (105) et le sixième bras (106) respectivement couplés à un côté avant droit et un côté arrière droit du corps central (10, 10i, 1005, 1100, 1110).

3. Procédé (900, 1200) selon la revendication 2, dans lequel le troisième bras (103) et le quatrième bras (103, 104, 106) sont couplés au corps central (10, 10i, 1005, 1100, 1110) à différentes hauteurs de montage de bras et dans lequel l'étape consistant à plier horizontalement le troisième bras (103) et le quatrième bras (103, 104, 106) comprend les étapes consistant à :
plier l'un parmi le troisième bras (103) et le quatrième bras (103, 104, 106) ayant une hauteur de montage de bras inférieure en tournant horizontalement dans une première direction ; et
plier l'autre parmi le troisième bras (103) et le quatrième bras (103, 104, 106) ayant une hauteur de montage de bras supérieure en tournant horizontalement dans une seconde direction opposée à la première direction.

4. Procédé (900, 1200) selon la revendication 3, dans lequel la première direction est l'une parmi une direction dans le sens des aiguilles d'une montre ou une direction dans le sens inverse des aiguilles d'une montre, et la seconde direction est l'autre parmi la direction dans le sens des aiguilles d'une montre ou la direction dans le sens inverse des aiguilles d'une montre.

5. Procédé (900, 1200) selon la revendication 3, dans lequel l'un parmi le troisième bras (103) et le quatrième bras (103, 104, 106) ayant la hauteur de montage de bras inférieure est horizontalement plié avant l'autre parmi le troisième bras (103) et le quatrième bras (103, 104, 106) ayant la hauteur de montage de bras supérieure.

6. Procédé (900, 1200) selon la revendication 3, dans lequel l'étape consistant à plier horizontalement le troisième bras (103) couplé au côté avant gauche du corps central (10, 10i, 1005, 1100, 1110) comprend l'étape consistant à faire tourner horizontalement le troisième bras (103) de plus de 90 degrés jusqu'à une position dans laquelle le troisième bras (103) est disposé de manière adjacente au corps central (10, 10i, 1005, 1100, 1110) et s'étend horizontalement dans une direction sensiblement parallèle avec un axe raccordant le premier bras (101) et le deuxième bras (102), de préférence
dans lequel l'étape consistant à plier horizontalement le quatrième bras (103, 104, 106) couplé au côté arrière gauche du corps central (10, 10i, 1005, 1100, 1110) du véhicule aérien sans pilote comprend l'étape consistant à faire tourner horizontalement le quatrième bras (103, 104, 106) sur plus de 90 degrés jusqu'à une position dans laquelle le quatrième bras (103, 104, 106) est disposé de manière adjacente au corps central (10, 10i, 1005, 1100, 1110) et s'étend horizontalement dans une direction sensiblement parallèle à l'axe raccordant le premier bras (101) et le deuxième bras (102).

7. Procédé (900, 1200) selon la revendication 2, dans lequel le cinquième bras (105) et le sixième bras (106) sont couplés au corps central (10, 10i, 1005, 1100, 1110) du véhicule aérien sans pilote à différentes hauteurs de montage de bras et dans lequel l'étape consistant à plier horizontalement le cinquième bras (105) et le sixième bras (106) comprend les étapes consistant à :
plier l'un parmi le cinquième bras (105) et le sixième bras (106) ayant une hauteur de montage de bras inférieure en tournant horizontalement dans une première direction ; et
plier l'autre parmi le cinquième bras (105) et le sixième bras (106) ayant une hauteur de montage de bras supérieure en tournant horizontalement dans une seconde direction opposée à la première direction.

8. Procédé (900, 1200) selon la revendication 7, dans lequel la première direction est l'une parmi une direction dans le sens des aiguilles d'une montre ou une direction dans le sens inverse des aiguilles d'une montre, et la seconde direction est l'autre parmi une direction dans le sens des aiguilles d'une montre ou la direction dans le sens inverse des aiguilles d'une montre.

9. Procédé (900, 1200) selon la revendication 7, dans lequel l'un parmi le cinquième bras (105) et le sixième bras (106) ayant la hauteur de montage de bras inférieure est plié avant l'autre parmi le cinquième bras (105) et le sixième bras (106) ayant la hauteur de montage de bras supérieure.

10. Procédé (900, 1200) selon la revendication 7, dans lequel l'étape consistant à plier horizontalement le cinquième bras (105) couplé au côté avant droit du corps central (10, 10i, 1005, 1100, 1110) comprend l'étape consistant à faire tourner horizontalement le cinquième bras (105) de plus de 90 degrés jusqu'à une position dans laquelle le cinquième bras (105) est disposé de manière adjacente au corps central (10, 10i, 1005, 1100, 1110) et s'étend horizontalement dans une direction sensiblement parallèle à un axe raccordant le premier bras (101) et le deuxième bras (102), de préférence
dans lequel l'étape consistant à plier horizontalement le sixième bras (106) couplé au côté arrière droit du corps central (10, 10i, 1005, 1100, 1110) comprend l'étape consistant à faire tourner le sixième bras (106) sur plus de 90 degrés jusqu'à une position dans laquelle le sixième bras (106) est disposé de manière adjacente au corps central (10, 10i, 1005, 1100, 1110) et s'étend horizontalement dans une direction sensiblement parallèle à l'axe raccordant le premier bras (101) et le deuxième bras (102).

11. Procédé (900, 1200) selon la revendication 2, dans lequel l'étape consistant à plier horizontalement le troisième bras (103) et le quatrième bras (103, 104, 106) comprend l'étape consistant à plier indépendamment le troisième bras (103) et le quatrième bras (103, 104, 106) à partir des premières positions dans lesquelles le troisième bras (103) et le quatrième bras (103, 104, 106) s'étendent radialement à partir du corps central (10, 10i, 1005, 1100, 1110) aux secondes positions dans lesquelles le troisième bras (103) et le quatrième bras (103, 104, 106) sont disposés de manière adjacente au corps central (10, 10i, 1005, 1100, 1110) et s'étendent horizontalement dans une direction parallèle à un axe raccordant le premier bras (101) et le deuxième bras (102).

12. Procédé (900, 1200) selon la revendication 11, dans lequel dans les secondes positions dans lesquelles le troisième bras (103) et le quatrième bras (103, 104, 106) sont disposés de manière adjacente au corps central (10, 10i, 1005, 1100, 1110), le troisième bras (103) et le quatrième bras (103, 104, 106) s'étendent horizontalement sensiblement parallèlement entre eux et sont disposés l'un sur l'autre à différentes hauteurs.

13. Procédé (900, 1200) selon la revendication 2, dans lequel l'étape consistant à plier horizontalement le cinquième bras (105) et le sixième bras (106) comprend l'étape consistant à plier indépendamment le cinquième bras (105) et le sixième bras (106) à partir des premières positions dans lesquelles le cinquième bras (105) et le sixième bras (106) s'étendent radialement du corps central (10, 10i, 1005, 1100, 1110) jusqu'aux secondes positions dans lesquelles le cinquième bras (105) et le sixième bras (106) sont disposés de manière adjacente au corps central (10, 10i, 1005, 1100, 1110) et s'étendent horizontalement dans une direction sensiblement parallèle à un axe raccordant le premier bras (101) et le deuxième bras (102), de préférence
dans lequel dans les secondes positions dans lesquelles le cinquième bras (105) et le sixième bras (106) sont disposés de manière adjacente au corps central (10, 10i, 1005, 1100, 1110), le cinquième bras (105) et le sixième bras (106) s'étendent horizontalement sensiblement parallèlement entre eux, et sont disposés l'un sur l'autre à différentes hauteurs.

14. Véhicule aérien sans pilote comprenant :
un corps central (10, 10i, 1005, 1100, 1110) ; et
une pluralité de bras (101-106) pouvant s'étendre à partir du corps central (10, 10i, 1005, 1100, 1110),
dans lequel chaque bras supporte un ou plusieurs ensembles de propulsion qui fournissent une force de propulsion alors que le véhicule aérien sans pilote est en vol, dans lequel un premier sous-ensemble de bras (101-106) est plié verticalement, dans lequel le premier sous-ensemble de bras (101-106) comprend un premier bras (101) et un deuxième bras (102), et un second sous-ensemble de bras (101-106) est plié horizontalement ;
**caractérisé en ce que** :
l'étape consistant à plier le premier sous-ensemble de bras (101-106) verticalement comprend l'étape consistant à plier verticalement le premier bras (101) et le deuxième bras (102) respectivement couplés à un côté avant et à un côté arrière du corps central (10, 10i, 1005, 1100, 1110) s'étendant radialement à partir du corps central (10, 10i, 1005, 1100, 1110) vers une partie inférieure du corps central (10, 10i, 1005, 1100, 1110) pour s'étendre dans la direction verticale.
